# EUROPÄISCHE PATENTSCHRIFT

(11) **EP 1 061 009 B1**
(45) Veröffentlichungstag und Bekanntmachung des Hinweises auf die Patenterteilung: **03.09.2003**
(21) Anmeldenummer: 99810542.3
(22) Anmeldetag: 18.06.1999
(51) Int. Cl.: B65D 88/52, B65D 88/14

(54) **Zusammenklappbarer Frachtcontainer für Lufttransport**
Collapsible freight container for air transport
Conteneur à marchandise repliable pour transport aérien

(43) Veröffentlichungstag der Anmeldung: 20.12.2000
(73) Patentinhaber: Alcan Technology & Management AG, 8212 Neuhausen am Rheinfall (CH)
(72) Erfinder: Ryzink, Eugen, 78224 Singen (DE); Hartmann, Ulf, 78247 Hilzingen (DE); Kiesewetter, Dieter, 78315 Radolfzel (DE); Ludwig, Heinz-Peter, 78234 Engen (DE)

(56) Entgegenhaltungen:
- EP-A- 0 533 626
- EP-A- 0 822 152
- EP-A- 0 832 825
- DE-A- 2 834 175
- DE-U- 29 801 224
- GB-A- 2 094 272

## Beschreibung

Die Erfindung betrifft einen zusammenklappbaren Frachtcontainer für Lufttransporte gemäss oberbegriff des Anspruchs 1.

Im Rahmen der Erfindung liegt auch ein Verfahren zu dessen Herstellung, sowie ein Verfahren zum Zusammenklappen eines erfindungsgemässen Frachtcontainers.

Luftfracht-Container, nachfolgend der Einfachheit halber Frachtcontainer genannt, werden benötigt, um Frachtgut, wie zerbrechliche und leicht verderbliche Güter, Reisegepäck, etc., aufzubewahren und sicher zu transportieren.

Aufgrund des im Flugzeug begrenzt verfügbaren Frachtraumes wird oftmals zur bestmöglichen Ausnutzung des verfügbaren Raumangebotes die Form der Frachtcontainer derart gestaltet, dass diese der Innenwand des runden Flugzeugrumpfes vorteilhaft angepasst ist. Dadurch kann der verfügbare Beladeraum sehr effizient genutzt werden. Aus diesem Grund sind Frachtcontainer oftmals auch nicht quaderförmig.

Auf Flughäfen sind die Stellflächen für leere Frachtcontainer begrenzt. Dadurch ergeben sich auf den Flughäfen in der Lagerbewirtschaftung leerer Frachtcontainer Platzprobleme. Aus Kostengründen verzichten deshalb die Fluggesellschaften auf eine weltweite Stationierung grösserer Mengen von Prachtcontainern. Dies bedingt jedoch, dass des öfteren Kontingente leerer Frachtcontainer zwischen den verschiedenen Flughäfen verschoben werden müssen.

Beispielsweise ist es nicht immer möglich, in einem Flugzeug in einem Hinflug genügend Frachtcontainer mitzuführen, welche auf der entgegengesetzten Strecke mit entsprechender Zuladung eingesetzt werden könnten. In der Folge gehen den Airlines Umsätze verloren, sofern diese auf den jeweiligen Flughäfen keine leeren Frachtcontainer in ausreichender Stückzahl lagern. Im umgekehrten Fall können beispielsweise nicht alle im Hinflug mitgeführten Frachtcontainer im Rückflug wieder zurück geführt werden. Die Flugzeugrümpfe der verschiedenen Flugzeugtypen weisen zudem oft unterschiedliche Formgebungen bzw. Abmessungen auf, weswegen zur Rückführung leerer Frachtcontainer einer bestimmten Grösse und Abmessung nicht jeder Flugzeugtyp geeignet ist.

Weiters benötigen die Airlines insbesondere zu Zeiten mit hohem Reiseverkehr überdurchschnittlich viele Frachtcontainer. Um Frachtspitzen abzudecken, müssen die Airlines des-5 halb entsprechend hohe Kapazitäten von leeren Frachtcontainern auf Lager haben oder müssen kurzfristig zusätzliche Frachtcontainer kaufen oder leasen.

Bis anhin löste man die oben genannten Probleme beispielsweise auch durch den Einsatz von Ein-Weg-Frachtcontainern aus Karton oder man verwendet Flugfracht-Paletten, auf denen die Ladung alleine mit Netzen gesichert wird.

Die Möglichkeit, Frachtcontainer zu falten bzw. zusammenzuklappen und ihr Platzvolumen auf einen Bruchteil ihres Betriebsvolumens zu reduzieren, beseitigt die genannten Nachteile. Dies bedeutet, dass sowohl für den Transport als auch für die Einlagerung auf wenig Raum eine hohe Zahl von leeren, zusammengeklappten Frachtcontainern untergebracht werden könnten.

Da Frachtcontainer für Flugzeuge, wie bereits erwähnt, oftmals keine Quader-Form aufweisen, sondern den Innenwandstrukturen des Flugzeugfrachtraumes angepasst sind, müssen jedoch spezielle Falttechniken entwickelt werden.

Ein gängiger Typ von Frachtcontainern der genannten Art ist beispielsweise in der EP 0 313 601 offenbart. Dieser Frachtcontainer ist ein gradflächig begrenzter Körper. Er besteht aus einer Bodenplatte und einem darauf aufgesetzten Traggerüst, welches vertikale Seitenprofile und horizontale Dachprofile enthält, wobei auf einer Seite die bodenwärtigen Seitenprofile in den Containerinnenraum geneigt sind und eine schräge untere Wandfläche begrenzen. Bei dieser allgemein bekannten Ausführungsform spricht man auch von einem am Frachtcontainer angeformten Container-Balkon. Die DE 28 34 175 beschreibt ebenfalls einen Frachtcontainer mit einem ähnlichen Aufbau.

Die DE 298 01 224 U1 beschreibt einen faltbaren Flugzeugcontainer mit einem angeformten Containerbalkon. Der Flugzeugcontainer enthält eine äussere obere und äussere untere Seitenwand, welche den Containerbalkon begrenzen, sowie eine den äusseren Seitenwänden gegenüberliegende innere Seitenwand. Sowohl die innere als auch die äusseren Seitenwände enthalten Scharnierverbindungen, welche erlauben den Flugzeugcontainer in vertikaler Richtung zusammenzufalten, wobei die innere Seitenwand zwei durch eine Scharnierverbindung verbundene, separate Wandflächen aufweist.

Die meisten bekannten zusammenklappbaren Frachtcontainer, welche einen solchen Containerbalkon aufweisen, sind aufgrund der oben genannten komplexen Wandstrukturen aufwendig und kompliziert in ihrer Demontage und Montage und benötigen oftmals mehrere personelle Hilfskräfte zum Halten und Aufbauen bzw. Abbauen. Weiters beruhen die angebotenen zusammenlegbaren Frachtcontainer häufig auf dem Prinzip einer Zerlegung in mehrere Einzelteile und/oder einer Auftrennung zwischen Gerüstprofilen und Rahmen- bzw. Verkleidungselementen. Die bisher bekannten zusammenklappbaren Frachtcontainer lassen sich zudem nicht auf eine minimale Resthöhe reduzieren, welche deutlich kleiner ist als die Länge der Projektion bzw. Vertikalhöhe der einwärts geneigten bodenwärtigen Seitenprofile, ohne dass der Frachtcontainer in Einzelteile zerlegt wird oder Rahmenflächen einer gemeinsamen Wandseite mit gemeinsamen Flächennormalen durch Scharniere segmentiert werden.

Die EP 0 822 152 beschreibt einen faltbaren Frachtcontainer, welcher über zwei gegenüberliegende in je drei Rahmen unterteilte Seiten ziehharmonikaartig von oben her zusammengefaltet werden kann. Hydraulische Dämpfungselemente sorgen dafür, dass das Zusammenfalten des Frachtcontainers kontinuierlich erfolgt. In besagter Offenbarungsschrift werden bestimmte in Rahmen gefasste Verkleidungselemente zuvor von der Gerüststruktur des Frachtcontainers gelöst und separat zusammengelegt. Diese Lösung weist den grossen Nachteil auf, dass der Frachtcontainer lediglich auf eine Gesamthöhe, welche der Vertikalhöhe des bodenwärtigen seitlichen Schrägprofils entspricht, zusammengeklappt werden kann, womit der Frachtcontainer maximal auf eine Höhe von 25 % - 30% seiner Betriebshöhe gefaltet werden kann und immer noch viel Platzvolumen beansprucht. Im weiteren ist das Faltprinzip mit dem separaten Umklappen bestimmter Wandelemente und den hydraulischen Stützen kompliziert und daher wartungsanfällig.

Aufgabe vorliegender Erfindung ist ein zusammenklappbarer Frachtcontainer für Lufttransporte, welcher innert kurzer Zeit mit wenigen Handgriffen und möglichst ohne oder wenig Werkzeug und Hilfsmittel und ebenfalls mit wenigen Handgriffen und möglichst ohne oder wenig Werkzeug und Hilfsmittel wieder aufgebaut werden kann, wobei der Frachtcontainer beim Zusammenklappen nicht in Einzelteile zerlegt werden muss.

Erfindungsgemäss wird die Aufgabe durch das kennzeichen des Anspruchs 1 gelöst.

Der Frachtcontainer enthält an seiner äusseren Seite einen äusseren oberen und äusseren unteren Seitenrahmen, wobei der äussere untere Seitenrahmen mit seiner bodenwärtigen Längsseite zum Containerinnenraum hin geneigt ist und der vordere und rückseitige Rahmen in ihrem gegen die äussere Seite weisenden Rahmenabschnitt einen Containerbalkon begrenzen.

Der erfindungsgemässe Frachtcontainer ist vorzugsweise eine Konstruktion aus Einzelrahmen. Auf ein vorzugsweise rechteckiges, ebenes und plattenförmiges Bodenelement schliessen an dessen Längsseiten drei vertikal ausgerichtete Rahmen an, welche beispielsweise aufgesetzt oder seitlich angebracht sein können. Diese Rahmen umfassen einen vorderen und einen rückseitigen Rahmen sowie einen inneren Seitenrahmen. Auf einer vierten Längsseite schliesst in schräger Ausrichtung nach aussen, der Rahmenkontur des vorderen und rückseitigen Rahmens folgend, ein unterer äusserer Seitenrahmen an, an dessen dachwärtiger Längsseite zweckmässig ein oberer äusserer Seitenrahmen mit im wesentlichen vertikaler Ausrichtung anschliesst. An die oberen Längsseiten des vorderen und rückseitigen Rahmens sowie des inneren und oberen äusseren Seitenrahmens schliesst ein Dachrahmen derselben Ausführungsart an.

Unter äusserer Seite ist die der Frachtraum- bzw. Flugzeuginnenwand zugewandte und gegebenenfalls balkonartig angepasste Containerseite zu verstehen, während mit innerer Seite die dem Frachtrauminneren zugewandte Containerseite gemeint ist.

Die Rahmen enthalten zweckmässig Rahmenprofile, welche beispielsweise über Knoten- bzw. Verbindungselemente, insbesondere Knoten- bzw. Verbindungsbleche, mittels Niet-Schraub- oder Schweissverbindung gegenseitig gefügt sind. Als Rahmenverbindungen können auch knotenlose Verbindungstechniken angewendet werden. Unter Rahmenprofil sind in diesem Zusammenhang jegliche Ausführungsformen von langgestreckten Konstruktionselementen zu verstehen, aus welchen sich ein Rahmen fügen lässt. Die Längsseiten der Rahmen werden bevorzugt von Rahmenprofilen begrenzt.

Die Rahmenprofile sind zweckmässig Profile aus Eisenmetallen, wie Eisen, verzinktes Eisen, Stahl, Nicht-Eisenmetallen, wie Messing, Kupfer, Magnesium und seine Legierungen, Aluminium und seine Legierungen und vorzugsweise in einem Strangpressverfahren hergestellte Hohlprofile, wie Einfach-Hohlprofile aus Aluminium oder seinen Legierungen. Die Rahmenprofile können im weiteren Stege, Rippen oder Flansche sowie Ausnehmungen oder Aussparungen, beispielsweise zur Aufnahme von Scharnierteilen, enthalten.

Die Knoten- oder Verbindungsbleche sind zweckmässig aus Eisenmetallen, wie Eisen, verzinktes Eisen, Stahl, Nicht-Eisenmetallen, wie Messing, Kupfer, Magnesium und seine Legierungen und vorzugsweise aus Aluminium oder seinen Legierungen.

Im weiteren können die Rahmenprofile und die Knoten- oder Verbindungselemente aus Kunststoffen, zweckmässig aus verstärkten, insbesondere aus faserverstärkten Kunststoffen, vorzugsweise aus kohle- oder glasfaserverstärkten Kunststoffen oder aus Verbundwerkstoffen, insbesondere aus Metall-Kunststoffverbundwerkstoffen, bestehen.

Die äussere Seite des erfindungsgemässen Frachtcontainers mit dem äusseren unteren und oberen Seitenrahmen bildet zusammen mit dem vorderen und rückseitigen Rahmen bevorzugt die Kontur eines sogenannten Containerbalkons aus: Ein äusserer unterer Seitenrahmen liegt schräg an die Längsseite des Bodenelementes an, so dass das Bodenelement und der äussere untere Seitenrahmen gemeinsam einen stumpfen Winkel einschliessen. An das horizontale Rahmenprofil oben des äusseren unteren Seitenrahmens schliesst ein äusserer oberer Seitenrahmen an, welcher vertikal ausgerichtet ist und an seinem horizontalen Rahmenprofil oben oder Längsseite oben an den Dachrahmen anschliesst.

Bis auf den vorderen und rückseitigen Rahmen, weisen alle Rahmen vorzugsweise eine Rechtecksform auf. Der vordere und rückseitige Rahmen sind in ihrem Grundaufbau ebenfalls rechteckförmige Rahmenstrukturen mit wenigstens einem horizontalen Rahmenprofil oben und zwei in Distanz zueinander liegenden vertikalen Rahmenprofilen innen und aussen auf. Ein horizontales Rahmenprofil oben reicht vorzugsweise seitlich über ein zusätzliches zwischenliegendes vertikales Rahmenprofil mittig hinaus. Am äusseren Ende des Rahmenprofils oben schliesst das Rahmenprofil aussen an, welches jedoch in einer bestimmten Länge über dem Bodenelement endet. Am unteren Endbereich schliesst ein schräg gegen das untere Ende des Rahmenprofils mittig geneigtes und an dessen Endabschnitt anstossendes äusseres Rahmenprofil schräg an.

Der Dachrahmen, der rückseitige Rahmen sowie die Seitenrahmen bzw. ihre Rahmenfelder sind vorzugsweise mit einer Wandverkleidung bedeckt oder ausgefacht. Vorzugsweise in einem vorderen Seitenrahmen ist eine Türöffnung zum Be- und Entladen des Frachtcontainers vorgesehen. Das den Containerbalkon ausbildende und zur Türöffnung hin durch das Rahmenprofil mittig begrenzte Rahmenfeld des vorderen Rahmens ist ebenfalls mit einer Wandverkleidung bedeckt oder ausgefacht.

Die am vorderen Rahmen angebrachte Containertüre ist beispielsweise eine flexible, in vertikale Richtung aufrollbare oder umschwenkbare Tür, die beispielsweise an ihrem dachwärtigen Ende über Kederprofile am Rahmenprofil oben des vorderen Rahmens und an ihrem bodenwärtigen Ende seitlich über Verriegelungsvorrichtungen oder über horizontal angeordnete Gurten an die seitlich anstossenden, vertikalen Rahmenprofile des vorderen Rahmens befestigt ist. Sie kann aber auch aus einem oder mehreren starren oder halbstarren, beispielsweise über Drehgelenke beweglichen verbundenen Plattenelementen bestehen.

Die Wandverkleidung besteht beispielsweise aus einem Metallblech bzw. aus Blechtafeln aus z.B. Stahl oder verzinktem Eisen, vorzugsweise jedoch aus Aluminium oder seinen Legierungen. Die Blechtafeln sind beispielsweise mittels Nieten, insbesondere Scherzugnieten, aus Aluminium, an Profilstege, die zweckmässig zur Rahmeninnenseite gerichtet sind, jener Rahmenprofile angebracht. Die Wandverkleidung kann auch aus textilen Flächengebilden, insbesondere aus textilen Geweben oder aus Kunststoffelementen, insbesondere aus faserverstärkten Kunststoffelementen oder aus Verbundwerkstoffen, insbesondere aus Metall-Kunststoff-Verbundwerkstoffen, bestehen.

Die einzelnen Rahmen werden vorzugsweise vorgefertigt, mit der Wandverkleidung versehen und anschliessend gegenseitig und mit der Bodenplatte zu einer formstabilen und selbsttragenden Containerstruktur zusammengefügt.

Der innere Seitenrahmen und der rückseitige Rahmen sind zweckmässig an ihren gegeneinander anstossenden vertikalen Rahmenprofilen oder Längsseiten über eine Drehgelenkverbindung, vorzugsweise über ein Bandscharnier, mit vertikal ausgerichteten Drehachsen drehbeweglich miteinander verbunden. Die Drehgelenke sind so konzipiert und befestigt, dass sich der innere Seitenrahmen mit seiner Aussenfläche vom Dachrahmen her betrachtet über die Drehgelenke im Gegenuhrzeigersinn auf die Aussenfläche des rückseitigen Rahmens umschwenken und sich auf diesen legen lässt.

Als Drehgelenke sind beispielsweise neben Scharnieren auch Kugelgelenke denkbar. Weiters können die Drehgelenke unter anderem auch Lager in geeigneter Ausführung enthalten. Die Drehgelenke und insbesondere Scharniere sind vorteilhaft aus Metall, wie Stahl, Eisen, Aluminium, Messing oder Legierungen davon und vorzugsweise aus verzinktem Eisen. Werden Bandscharniere eingesetzt, so können sich diese teilweise oder vollständig über die Gesamtlänge der Rahmenprofile oder Längsseiten erstrecken.

Der innere Seitenrahmen und der vordere Rahmen sind an ihren gegeneinander anstossenden vertikalen Rahmenprofilen oder Längsseiten zweckmässig mittels einer lösbaren Verbindung starr miteinander verbunden. Vorzugsweise sind sie über eine oder mehrere, insbesondere jedoch über zwei randseitig an den oder in den Rahmenprofilen oder Längsseiten angebrachten Verriegelungsvorrichtungen, vorzugsweise Riegelvorrichtungen in der Ausführung von Schnappverschlüssen, miteinander verbunden.

Der äussere untere Seitenrahmen ist an seinem unteren Abschnitt mit dem Bodenelement und/oder dem seitlich anstossenden rückseitigen und/oder vorderen Rahmen zweckmässig mittels einer lösbaren Verbindung starr verbunden. Vorzugsweise ist dieser an seinem horizontalen Rahmenprofil unten über eine oder zwei randseitige Verriegelungsvorrichtungen, vorzugsweise Riegelvorrichtungen in der Ausführung von Schnappverschlüssen, mit dem seitlich anstossenden rückseitigen und/oder vorderen Rahmen starr verbunden.

Der äussere untere Seitenrahmen ist weiters an seinem horizontalen Rahmenprofil oben oder Längsseite oben über eine Drehgelenkverbindung, vorzugsweise über ein Bandscharnier, mit horizontal ausgerichteten Drehachsen mit dem horizontalen Rahmenprofil unten oder Längsseite unten des äusseren oberen Seitenrahmens drehbeweglich verbunden.

Der äussere obere Seitenrahmen ist an seinem unteren Abschnitt mit dem seitlich anstossenden rückseitigen und/oder vorderen Rahmen zweckmässig mittels einer lösbaren Verbindung starr verbunden. Vorzugsweise ist dieser an seinem horizontalen Rahmenprofil unten über eine oder zwei randseitige Verriegelungsvorrichtungen, vorzugsweise Riegelvorrichtungen in der Ausführung von Schnappverschlüssen, mit dem seitlich anstossenden rückseitigen und/oder vorderen Rahmen verbunden. Als Variante kann auch dieselbe Verbindung resp. Verriegelungsvorrichtung im oberen Abschnitt des äusseren unteren Rahmens, vorzugsweise in dessen horizontalen Rahmenprofil oben angebracht sein.

Der äussere obere Seitenrahmen ist an seinem horizontalen Rahmenprofil oben oder Längsseite oben über eine Drehgelenkverbindung, vorzugsweise über ein Bandscharnier, mit horizontal ausgerichteter Drehachse drehbeweglich mit dem anstossenden Rahmenprofil aussen oder Längsseite aussen des Dachrahmens verbunden.

Die Drehgelenke sind derart ausgeführt und befestigt, dass sich der äussere untere Seitenrahmen von seiner Schrägposition im unverriegelten Zustand in die Flächenebene des äusseren oberen Seitenrahmens schwenken lässt und sich der äussere untere und obere Seitenrahmen gemeinsam um die dachwärtige Drehgelenkverbindung auf den Dachrahmen schwenken lassen. In der Regel steht der äussere untere Seitenrahmen mit seinem Rahmenprofil unten oder Längsseite unten oder einem daran angebrachten Anbauteil nach Öffnen der Verriegelungsvorrichtung am Boden auf und kann erst nach Lösen und Umschwenken des äusseren oberen Rahmens weiter umgeschwenkt werden.

Der rückseitige und vordere Rahmen sind an ihren unteren Rahmenenden bzw. horizontalen Rahmenprofilen unten oder Längsseiten zweckmässig über eine Drehgelenkverbindung mit horizontal ausgerichteter Drehachse drehbeweglich mit dem Bodenelement verbunden. Als Drehgelenkverbindung werden vorzugsweise wenigstens zwei randseitig am Rahmen und Bodenelement angebrachte Scharniere verwendet.

Der vordere Rahmen weist vorzugsweise kein unteres horizontales Rahmenprofil auf. Die Drehgelenkverbindung besteht zweckmässig aus zwei Scharnieren. Ein Scharnierflügel ist jeweils am Bodenelement angebracht und der zweite Scharnierflügel ist an einem länglichen Verbindungselement, insbesondere Verbindungsblech, befestigt, wobei das Verbindungselement am vertikalen Rahmenprofil mittig bzw. am vertikalen Rahmenprofil innen des vorderen Rahmens starr befestigt ist.

Der rückseitige und der vordere Rahmen sind an ihren dachwärtigen, Rahmenprofilen oben oder Längsseiten oben über Drehgelenkverbindungen mit horizontal ausgerichteter Drehachse drehbeweglich mit dem anstossenden Rahmenprofil rückseitig, bzw. vorne oder den entsprechenden Längsseiten des Dachrahmens verbunden. Als Drehgelenkverbindungenen werden vorzugsweise sich teilweise oder vollständig über die Gesamtlänge der Rahmenprofile erstreckende Bandscharniere verwendet.

Die Drehgelenkverbindungen zwischen dem Bodenelement und dem rückseitigen bzw. vorderen Rahmen einerseits und zwischen dem Dachrahmen und dem rückseitigen bzw. vorderen Rahmen andererseits sind derart beschaffen und an die Rahmenstruktur bzw. Rahmenprofile angebracht, dass sich die Containerkonstruktion nach Umklappen der Seitenrahmen horizontal von der Rückseite in Richtung des vorderen Rahmens und vertikal von der Dachseite in Richtung des Bodenelementes parallelogrammartig zusammenklappen lässt.

Die im vorderen Rahmen ausgebildete Türöffnung ist vorzugsweise mit einer flexiblen und in vertikaler vom Bodenelement zum Dachrahmen weisenden Richtung aufrollbaren Containertür verschliessbar. EP 0 533 626 beschreibt beispielsweise eine flexible Türe wie sie in vorliegender Erfindung verwendet werden kann. Als Türe kann auch eine sogenannte "Barless" Falttüre verwendet werden, wie sie im nachfolgenden Ausführungsbeispiel beschrieben ist.

Am äusseren unteren und am inneren Seitenrahmen sowie am rückseitigen Rahmen ist zweckmässig bodenwärtig am Rahmenprofil unten bzw. an deren Profilstegen ein Abdeckoder Dichtungselement angebracht, beispielsweise ein Längsblech und/oder ein Dichtungsstreifen, vorteilhaft aus Kunststoff, bevorzugt aus einem Elastomer oder Polyvinylchlorid (PVC). Der Dichtungsstreifen kann direkt an den entsprechenden Rahmenprofilen, beispielsweise durch Kleben, befestigt sein oder in eine entsprechende nutförmige Ausnehmung am Rahmenprofil eingezogen sein, wobei die nutförmige Ausnehmung bevorzugt ein am Rahmenprofil befestigtes Scharnierprofil mit Kedernut ist. Das Scharnierprofil mit Kedernut ist vergleichbar mit jenen zur Aufhängung von Falttüren verwendeten Scharnierprofilen. Das Abdeck- oder Dichtungselement liegt vorzugsweise bündig am Bodenelement an und dichtet gegebenenfalls einen Spalt zwischen Rahmen und Bodenelement ab.

Die im betriebsbereiten Zustand des Frachtcontainers gegeneinander anstossenden Rahmenprofilflächen der Rahmen können durch Dichtungsstreifen, beispielsweise aus Kunststoff, welche zweckmässig auf einer der Rahmenprofilfläche angebracht bzw. aufgeklebt sind, zusätzlich abgedichtet werden.

Die verriegel- und lösbaren Verbindungen oder Verriegelungsvorrichtungen zwischen einzelnen Rahmen dienen dazu, die entsprechend zu arretierenden Rahmen, insbesondere die Seitenrahmen, in ihrer durch die Drehgelenkverbindungen gegebenen Schwenkbarkeit zu blockieren. Dafür eignen sich insbesondere Riegelvorrichtungen. Diese können beispielsweise im äusseren Endbereich von, vorzugsweise horizontalen, Rahmenhohlprofilen eines ersten Rahmens, insbesondere Seitenrahmens, eingelassene und über einen Lagerbock, vorzugsweise horizontal, geführte, federbelastete Verschluss-Bolzen sein, welche in eine seitliche Öffnung, nachfolgend Rastöffnung genannt, eines seitlich anstossenden und vorzugsweise in einem 90°-Winkel zum horizontalen Rahmenhohlprofil stehenden Rahmenhohlprofils eines zweiten Rahmens eingreifen und den ersten Rahmen verriegeln bzw. arretieren. i Die Verriegelung geschieht vorzugsweise jeweils an den äusseren Bereichen einer Längsseite.

Der Verschluss-Bolzen ist im entspannten Zustand der Feder vorteilhaft in der Verriegelungsposition. Das Öffnen der Verriegelung geschieht zweckmässig über die Bedienung eines mit dem Verschluss-Bolzen, beispielsweise durch eine Schweissverbindung, verbundenen Betätigungselementes, in der Ausbildung eines Stiftes, Hebels, Ringes oder Lasche. Das Betätigungselement kann auch ein Teil des Verschluss-Bolzens sein.

Der oder die Verschluss-Bolzen werden zum Öffnen zurückgeschoben und aus der Rastöffnung geführt und in eine Öffnungsposition gebracht, wobei die zugehörige Feder gespannt wird. Der betreffende Seitenrahmen wird dadurch beispielsweise umschwenkbar. Durch das Entspannen der zugehörigen Feder kann man den Verschluss-Bolzen wiederum in die Rastöffnung einschnappen lassen und die Verriegelung herstellen. Ein solcher Verschluss wird auch Schnappverschluss genannt.

Es kann vorgesehen sein, dass der Verschluss-Bolzen beim Zurückschieben in den Öffnungszustand in eine fixe Position einrastet und blockiert wird, wobei der Verschluss-Bolzen beispielsweise durch wiederholte Bedienung des Betätigungselementes aus der Öffnungsposition gelöst und in die Verriegelungsposition gebracht werden kann.

Das Betätigungselement kann derart ausgestaltet sein, dass eine Bedienung von Hand oder unter Zuhilfenahme eines Werkzeuges geschieht. Das Betätigungselement kann entweder durch eine Öffnung aus dem Rahmenhohlprofil hervorstehen oder vollständig im Rahmenhohlprofil eingelassen sein, so dass dieser idealerweise unter Zuhilfenahme eines Werkzeuges über eine im Rahmenhohlprofil vorgesehene Ausnehmung bedient werden kann. Letztere Variante weist den Vorteil auf, dass keine Teile am Rahmenhohlprofil vorstehen, welche beim Zusammenklappen des Frachtcontainers stören oder beschädigt werden können. Die Verriegelungsvorrichtung, das heisst das Betätigungselement ist vorzugsweise so ausgelegt, dass der Verschlussmechanismus nur vom Containerinnern aus bedient werden kann. Dadurch wird verhindert, dass Unbefugte einen verschlossenen Frachtcontainer unter Umgehung der Türverriegelung öffnen bzw. zusammenklappen können.

Die Verriegelungsvorrichtung kann beispielsweise auch nach dem in EP 0 533 626 beschriebenen Prinzip funktionieren, wobei vorzugsweise möglichst alle Riegelelemente zuzüglich Betätigungselement im entsprechenden Rahmenhohlprofil eingelassen sind.

Der erfindungsgemässe Frachtcontainer enthält vorzugsweise maximal sechs Verriegelungspunkte, welche zweckmässig paarweise jeweils gegenüberliegend angeordnet sind, und die für das Zusammenklappen und den Aufbau des Frachtcontainers bedient, d.h. geöffnet, werden müssen. Die Verriegelung der Türe ist nicht mitgerechnet.

Das Bodenelement kann, ohne die Faltbarkeit des Frachtcontainers zu beeinträchtigen, entweder als Bodenelement für den Transport mit Rollwagen oder als Bodenelement für den Transport mit Gabelstaplern ausgelegt sein. Im letzteren Fall enthält das Bodenelement sogenannte Taschen oder Kanäle, welche zur Aufnahme der Gabeln bzw. Zinken des Gabelstaplers vorgesehen sind.

Das Zusammenklappen des Frachtcontainers geschieht, indem die den inneren Seitenrahmen mit dem vorderen Rahmen verbindenden Verriegelungsvorrichtungen geöffnet werden und der innere Seitenrahmen um die den inneren Seitenrahmen mit dem rückseitigen Rahmen verbindende Drehgelenkverbindung geschwenkt wird und der innere Seitenrahmen auf den rückseitigen Rahmen gelegt wird, so dass die jeweils aussen liegenden Rahmenseiten des rückseitigen Rahmens und des inneren Seitenrahmens aufeinander zu liegen kommen.

Anschliessend werden die Verriegelungsvorrichtungen an den beiden äusseren Seitenrahmen geöffnet, so dass die beiden Seitenrahmen nicht mehr seitlich an den rückseitigen und/oder vorderen Rahmen bzw. an das Bodenelement arretiert sind. Der äussere untere Rahmen schwenkt dabei um die an seinem Rahmenprofilen oben angebrachten Drehgelenkverbindung in die Flächenebene des äusseren oberen Rahmens. Der äussere untere und obere Seitenrahmen werden nun gemeinsam um die dachwärtige Drehgelenkverbindung geschwenkt und auf den Dachrahmen gelegt, so dass die beiden äusseren Seitenrahmen mit ihren Rahmenaussenflächen auf der Aussenfläche des Dachrahmens aufliegen.

Da der vordere und rückseitige Rahmen sowohl mit dem Dachrahmen als auch mit dem Bodenelement, wie vorstehend beschrieben, über Drehgelenke verbunden sind, lässt sich nun in einem letzten Schritt der Frachtcontainer von der Rückseite in Richtung des vorderen Rahmens und von der Dachseite in Richtung des Bodenelementes parallelogrammartig zusammenklappen.

Da beispielsweise eine geöffnete und aufgerollte oder umgeschwenkte Falttür am Rahmenprofil oben des vorderen Rahmens befestigt ist, liegt die zusammengerollte Falttür an einer Aussenseite des zusammengeklappten Frachtcontainers.

Der erfindungsgemässe Frachtcontainer für Lufttransporte kann die für Frachtcontainer üblichen und gebräuchlichen Abmessungen und Dimensionen aufweisen. Der Frachtcontainer weist jedoch vorzugsweise Abmessungen und Dimensionen auf, welche erlauben diesen auf die für ein Standard-Luftfracht-Palett übliche Bodenfläche von 88" x 125" (entspricht rund: 2,2 m x 3,2 m) zusammenzuklappen. Dadurch kann der zusammengeklappte Frachtcontainer zu mehreren Stücken auf einer Standard-Luftfracht-Palette gestapelt und transportiert werden.

Das erfindungsgemässe Erzeugnis ist herstellbar dadurch, dass vorfabrizierte und in Mass geschnittene Rahmenprofile, vorzugsweise stranggepresste Einfachhohlprofile aus Aluminium, über Eckverbindungen, vorzugsweise über Verbindungsbleche, zu Rahmen gefügt werden, und an die Rahmen, d.h. an dessen Rahmenprofile, mit Ausnahme des die Türöffnung enthaltenden Rahmens, vorzugsweise an den Stegen der Rahmenprofile, Wandverkleidungen, vorzugsweise aus Aluminiumblech, ausfachend befestigt werden, vorzugsweise durch Nieten, insbesondere durch Scherzugnieten, und die Rahmen an ihren Rahmenprofilen mittels Drehgelenken und/oder Verriegelungsvorrichtungen zusammen mit dem Bodenelement zu einem formstabilen, selbsttragenden und zusammenklappbaren Frachtcontainer gefügt werden.

Der Frachtcontainer ist vorzugsweise an seiner inneren und/oder äusseren Seite(n) zwischen dem rückseitigen Rahmen und/oder Dachrahmen und dem vorderen Rahmen über eine oder mehrere an Rahmenprofilen angebrachten Verstrebungen derart gesichert, dass der Frachtcontainer nach Umklappen der Seitenrahmen gegen eine von vorne in Richtung des rückseitigen Rahmens wirkende Kraft gesichert ist, jedoch von der Rückseite in Richtung des vorderen Rahmens zusammengeklappt werden kann. Die Verstrebungen dienen weiters zur allgemeinen Stabilisierung der Containerstruktur in betriebsbereitem Zustand.

Bevorzugt werden seilartige Verstrebungen verwendet. Besonders zweckmässig sind Stahlseile, beispielsweise in einer Dicke von 3 - 7 mm. Im vollkommen aufgeklappten Zustand des Frachtcontainers ist die seilartige Verstrebung vorteilhaft gespannt.

Eine Verstrebung, vorzugsweise in Ausführung eines Stahlseiles, ist beispielsweise an der inneren Seite zwischen dem Dachrahmen und dem vorderen Rahmen vorgesehen. Die Verstrebung ist bevorzugt am Rahmenprofil innen des Dachrahmens in einer Distanz zum rückseitigen Rahmen von beispielsweise 1/6 bis 1/2, bevorzugt von rund 1/3, der Gesamtrahmenprofillänge befestigt und ist am Rahmenprofil innen des vorderen Rahmens in einer Distanz zum Bodenelement von beispielsweise 1/6 bis 1/2, bevorzugt von rund 1/3, der Gesamtrahmenprofillänge befestigt.

Eine weitere Verstrebung, vorzugsweise in Ausführung eines Stahlseiles, kann beispielsweise an der äusseren Seite zwischen dem rückseitigen Rahmen und dem vorderen Rahmen vorgesehen sein. Die Verstrebung ist bevorzugt am Rahmenprofil aussen des rückseitigen Rahmens und am Rahmenprofil aussen des vorderen Rahmens in nahezu horizontaler oder leicht schräger Lage befestigt.

Der erfindungsgemässe Frachtcontainer ist unter anderem vorzugsweise in Bezug auf die Form, die Grösse, die Materialbeschaffenheit, die Bedingungen für die Luftfahrttechnische Zulassung und das Handling mit herkömmlichen Standardcontainern vergleichbar.

Die Vorteile vorliegender Erfindung liegen darin, dass der Frachtcontainer auf eine minimale Gesamthöhe und Grundfläche zusammengeklappt werden kann, ohne dass einzelne Elemente oder Bestandteile vollständig von der Containerstruktur abgetrennt werden müssen. Die maximale Gesamthöhe des zusammengeklappten Frachtcontainers beträgt nicht mehr als die Summe der Höhe des Bodenelementes und der Rahmenprofilquerschnitte des inneren und äusseren Seitenrahmens und des rückseitigen Rahmens.

Da der erfindungsgemässe Frachtcontainer mit Ausnahme der Türverriegelung lediglich sechs Verriegelungspunkte aufweist, kann der Frachtcontainer innert kurzer Zeit und mit lediglich zwei Personen unter Umständen auch von nur einer Person und mit äusserst wenig Aufwand zusammengeklappt bzw. aufgebaut werden. Das Faltprinzip ist denkbar einfach, weswegen die Benutzer keine längeren Instruktionen benötigen. Der erfindungsgemässe Frachtcontainer ist in Bezug auf Festigkeit, Stabilität, Qualität, Lebensdauer, Wartungsanfälligkeit und Reparaturfähigkeit den bekannten Standardcontainern ebenbürtig. Im folgenden wird die Erfindung anhand eines Beispiels und mit Bezug auf die beiliegenden Zeichnungen näher erläutert. Es zeigen:
- Fig. 1:: eine schematische Ansicht eines Frachtcontainers aus der Perspektive;
- Fig. 2a:: eine Frontansicht von aussen auf die innere Seite des Frachtcontainers;
- Fig. 2b:: einen Querschnitt durch den inneren Seitenrahmen entlang D - D im Bereich des vorderen Rahmens gemäss Fig. 2a;
- Fig. 2c:: einen Querschnitt durch den inneren Seitenrahmen entlang D - D im Bereich des rückseitigen Rahmens gemäss Fig. 2a;
- Fig. 3a:: eine Frontansicht von aussen auf die Rückseite des Frachtcontainers;
- Fig. 3b:: einen Querschnitt durch den rückseitigen Rahmen entlang A - A im Bereich des dachwärtigen Scharniers gemäss Fig. 3a;
- Fig. 3c:: einen Querschnitt durch den rückseitigen Rahmen entlang A - A im Bereich des bodenwärtigen Scharniers gemäss Fig. 3a;
- Fig. 4a:: eine Frontansicht von aussen auf die äussere Seite des Frachtcontainers;
- Fig. 4b:: einen Querschnitt durch die äusseren Seitenrahmen entlang B - B im Bereich des dachwärtigen Scharniers gemäss Fig. 4a;
- Fig. 4c:: einen Querschnitt durch die äusseren Seitenrahmen entlang B - B im Bereich der Verbindung zwischen dem äusseren oberen und dem äusseren unteren Seitenrahmen gemäss Fig. 4a;
- Fig. 4d:: einen Querschnitt durch die äusseren Seitenrahmen entlang B - B im Bereich des 5 Bodenelementes gemäss Fig. 4a;
- Fig. 5a:: eine Frontansicht von aussen auf die vordere Seite des Frachtcontainers;
- Fig. 5b:: einen Querschnitt durch den vorderen Rahmen entlang C - C im Bereich des dachwärtigen Scharniers gemäss Fig. 5a;
- Fig. 5c:: einen Querschnitt durch den vorderen Rahmen entlang C - C im Bereich des bodenwärtigen Scharniers gemäss Fig. 5a;
- Fig. 6a-c:: eine schematische Seitenansicht des parallelogrammartigen Zusammenklappens des Frachtcontainers;
- Fig. 7a:: Querschnitt durch einen Schnappverschluss im verriegelten Zustand entlang E - E gemäss Fig. 2a und
- Fig. 7b:: Draufsicht eines Schnappverschlusses aus Richtung Z gemäss Fig. 7a.

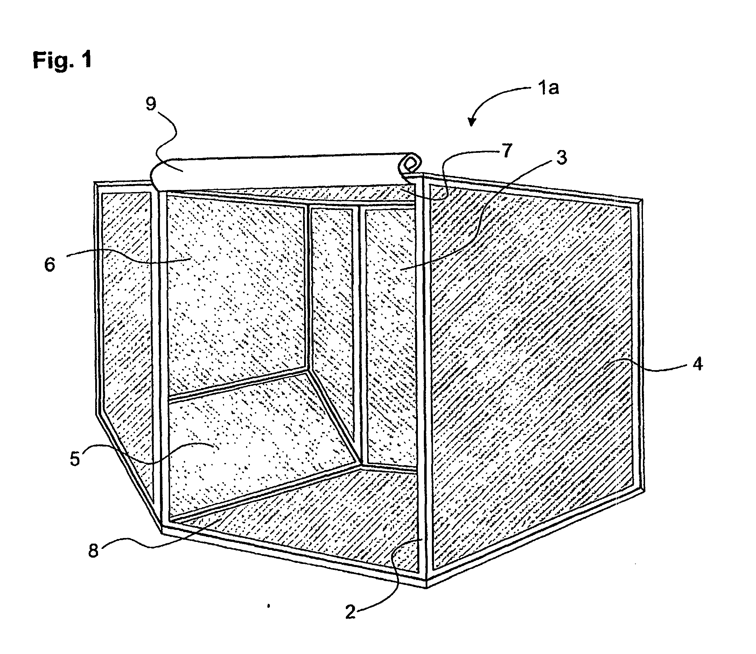

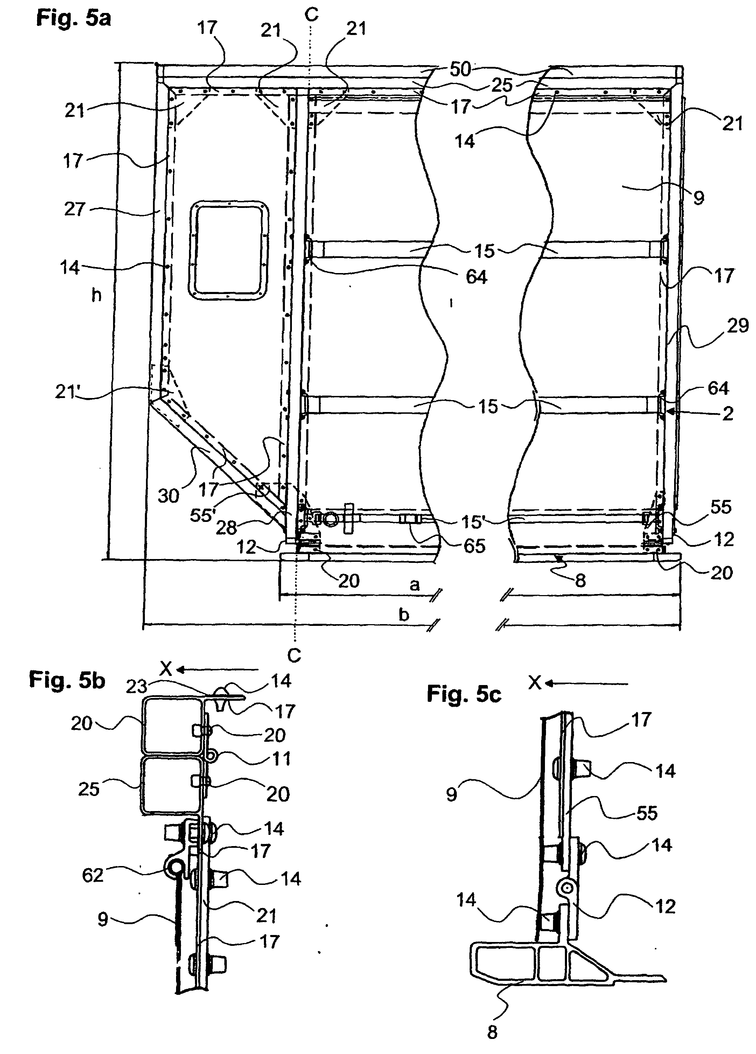

Der erfindungsgemässe Frachtcontainer ist in Fig. 1 als aufgeklappter, betriebsbereiter Frachtcontainer 1a abgebildet. Die Rahmen befinden sich in der sogenannten Betriebsposition. Die Abbildung ist nur schematisch und soll lediglich die Position der einzelnen Rahmen darlegen. Der Frachtcontainer enthält ein Bodenelement 8 und eine auf diesem angeordnete Rahmenkonstruktion enthaltend einen vorderen Rahmen 2, einen rückseitigen Rahmen 3, einen inneren Seitenrahmen 4, einen äusseren unteren und äusseren oberen Seitenrahmen 5, 6 und einen Dachrahmen 7. Der vordere Rahmen 2 enthält eine Türöffnung, welche mit einer flexiblen Tür 9 verschlossen werden kann. Im dachwärtigen Bereich ist die Tür 9 längs der horizontalen frontseitigen Fläche des Rahmenprofils vorne 25 des vorderen Rahmens 2 montiert (siehe auch Fig. 5a). Mit frontseitiger Fläche ist in diesem Text eine in der Frontansicht dem Betrachter zugewandte Flächenseite zu verstehen.

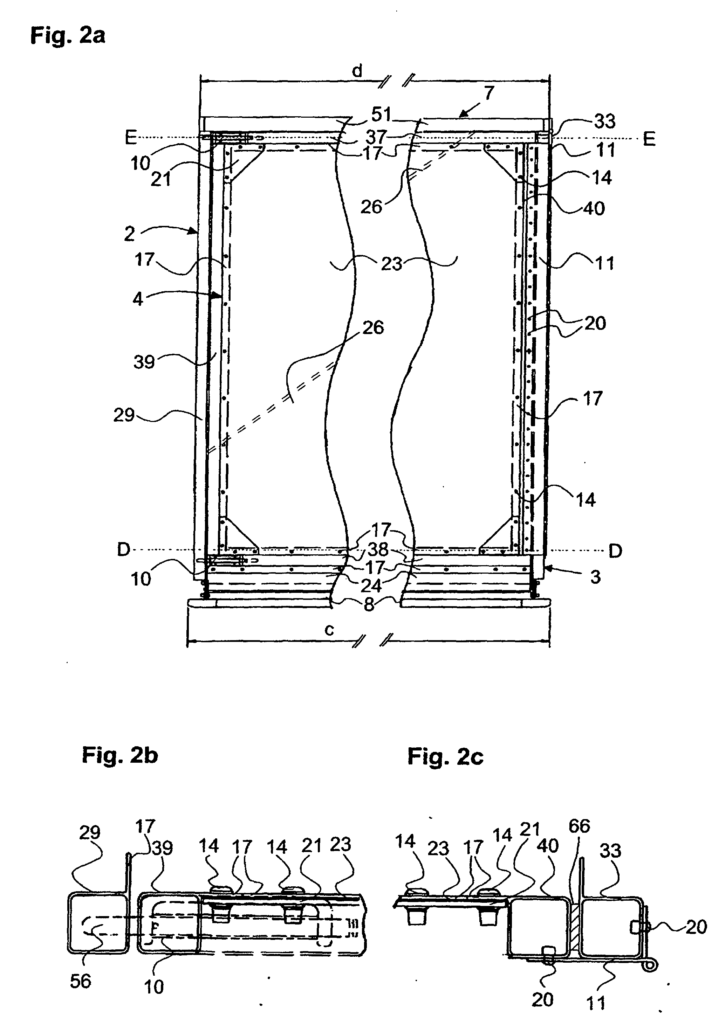

Der in Fig. 2 gezeigte innere Seitenrahmen 4 besteht aus vier Rahmenprofilen oben, unten, vorne, rückseitig 37, 38, 39, 40, welche über Verbindungs- bzw. Knotenbleche 21, die mit Scherzugnieten 14 an den Profilstegen 17 angenietet sind, gegenseitig gefügt sind. Der Seitenrahmen 4 ist mit einer Wandverkleidung 23 aus Aluminiumblech ausgefacht, welche mittels Scherzugnieten 14 an die innenliegenden Profilstege 17 befestigt ist. Auf der gegen den vorderen Rahmen 2 liegenden Rahmenseite sind randseitig in das horizontale Rahmenprofil oben 37 und unten 38 in diese eingelassene Schnappverschlüsse 10 angebracht. Sie sind in Fig. 2a der Übersicht wegen sichtbar gemacht.

Die Verschluss-Bolzen 56 der Schnappverschlüsse 10 greifen im geschlossenen Zustand in Rastöffnungen am anstossenden Rahmenprofil innen 29 des vorderen Rahmens 2 ein (siehe auch Fig. 2b).

Die nach aussen weisenden, frontseitigen Rahmenprofilflächen der Rahmenprofile 37, 38, 39, 40 des inneren Rahmens 4 liegen mit den frontseitigen Rahmenprofilflächen der Rahmenprofile innen 51, 29, 33 des Dachrahmens 7, des vorderen Rahmens 2 und des rückseitigen Rahmens 3 in einer gemeinsamen Ebene.

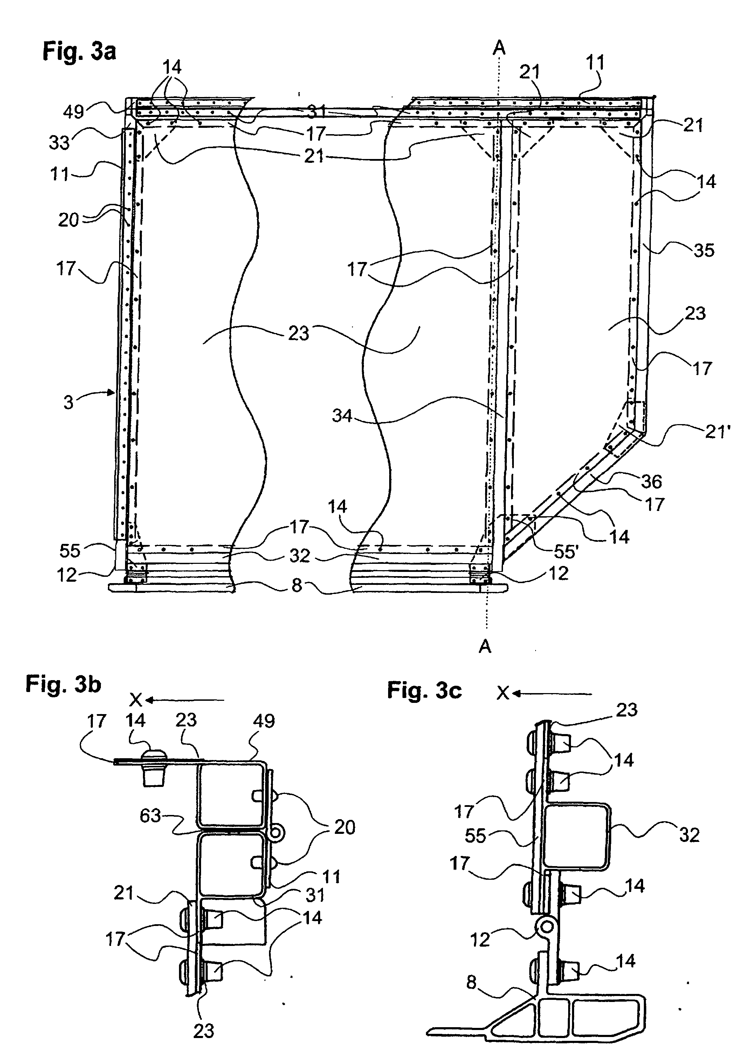

Bodenwärtig ist ein Längsblech 24 an den äusseren Profilsteg 17 des Rahmenprofils unten 38 des inneren Seitenrahmens 4 angebracht, welches bis zum Ansatz des Bodenelementes 8 reicht. Auf dem vertikalen Rahmenprofil rückseitig 40 des inneren Rahmens 4 ist frontseitig ein Scharnierflügel eines Bandscharniers 11 mittels Nieten 20 befestigt. Das Bandscharnier 11 ist mit seinem zweiten Scharnierflügel frontseitig an das vertikale Rahmenprofil innen 33 des rückseitigen Rahmens 3 (siehe auch Fig. 3a) ebenfalls mittels Nieten 20 befestigt (siehe auch Fig. 2c). Zwischen den beiden Rahmenprofile 33, 40 liegt ein Dichtelement 66. Der innere Seitenrahmen 4 lässt sich nach dem Lösen der Schnappverschlüsse 10 um die Scharnierachse schwenken und auf den rückseitigen Rahmen 3 legen.

Der Frachtcontainer ist vorzugsweise an seiner inneren Seite zwischen dem Dachrahmen 7 und dem vorderen Rahmen 2 über eine an den Rahmenprofilen innen 29, 51 angebrachte Verstrebung in der Ausführung eines Drahtseiles 26 (in Fig. 2a schematisch dargestellt) derart gesichert, dass der Frachtcontainer nach Umklappen der Seitenrahmen 4, 5, 6 nicht von vorne in Richtung des rückseitigen Rahmens 3 bewegt, jedoch von der Rückseite in Richtung des vorderen Rahmens 2 zusammengeklappt werden kann. Das Drahtseil 26 weist eine Dicke von ca. 5 mm auf und ist vorzugsweise an den Profilstegen 17 der Rahmenprofile 29, 51 angebracht. Im vollkommen aufgeklappten Zustand des Frachtcontainers ist das Drahtseil 26 gespannt.

Das Drahtseil 26 ist am Rahmenprofil innen 51 des Dachrahmens 7 in einer Distanz zum rückseitigen Rahmen 3 von rund 1/3 der Gesamtrahmenprofillänge und am Rahmenprofil innen 29 des vorderen Rahmens 2 in einer Distanz zum Bodenelement 8 von rund 1/3 der Gesamtrahmenprofillänge befestigt. Zur Befestigung sind Nieten, insbesondere Scherzugnieten oder Schrauben vorgesehen.

Der in Fig. 3a gezeigte rückseitige Rahmen 3 besteht aus Rahmenprofile oben, unten, innen, mittig, aussen, schräg 31, 32, 33, 34, 35, 36, welche über Verbindungsbleche 21, 21', 55, 55' die mit Scherzugnieten 14 an den Profilstegen 17 befestigt sind, gefügt sind. Der Rahmen 3 ist mit Wandverkleidungen 23 aus Aluminiumblech, welche an den inneren Profilstegen 17 mit Scherzugnieten 14 befestigt sind, ausgefacht. Am aussen liegenden Profilsteg 17 des horizontalen Rahmenprofils unten 32 sind randseitig Scharniere 12 mittels Scherzugnieten 14 montiert, die Nietverbindungen 14 führen zugleich auch durch das innenseitig am Rahmenprofil 32 anliegende Verbindungsblech 55 (siehe auch Fig. 3c). Die Scharniere 12 sind mit den entgegengesetzten Scharnierflügeln frontseitig mittels Scherzugnieten 14 an einem vertikalen Steg am Bodenelement 8 fixiert.

Die Rahmenprofile 34, 35, 36 und 31 bilden den sogenannten Containerbalkon aus.

An die Rahmenprofile 31, 33, 35 und 36 stossen der Seite entsprechend das Rahmenprofil rückseitig 40 des inneren Seitenrahmens 4, das Rahmenprofil rückseitig 47 des äusseren oberen Seitenrahmens 6, das Rahmenprofil rückseitig 43 des äusseren unteren Seitenrahmens 5 (nicht ersichtlich aus Fig. 3a) sowie das Rahmenprofil rückseitig 49 des Dachrahmens 7 an.

Die nach aussen weisenden, frontseitigen Rahmenprofilflächen der Rahmenprofile 31, 32, 33, 34, 35, 36 des rückseitigen Rahmens 3 liegen mit der Rahmenprofilfläche des Rahmenprofils rückseitig 49 des Dachrahmens 7 in einer gemeinsamen Ebene.

Der rückseitige Rahmen 3 und der Dachrahmen 7 sind an ihren anstossenden parallel laufenden horizontalen Rahmenprofilen 49, 31 über ein an den Profilseiten mittels Nieten 20 angebrachtes Bandscharnier 11 verbunden (siehe auch Fig. 3b). Zwischen den beiden Rahmenprofilen 49, 31 ist ein Dichtungselement 63 angebracht. Den Profilsteg 17 des Rahmenprofils 31 durchdringen Scherzugnieten 14, welche das Rahmenprofil 31 mit dem Verbindungsblech 21 und der Wandverkleidung 23 verbinden.

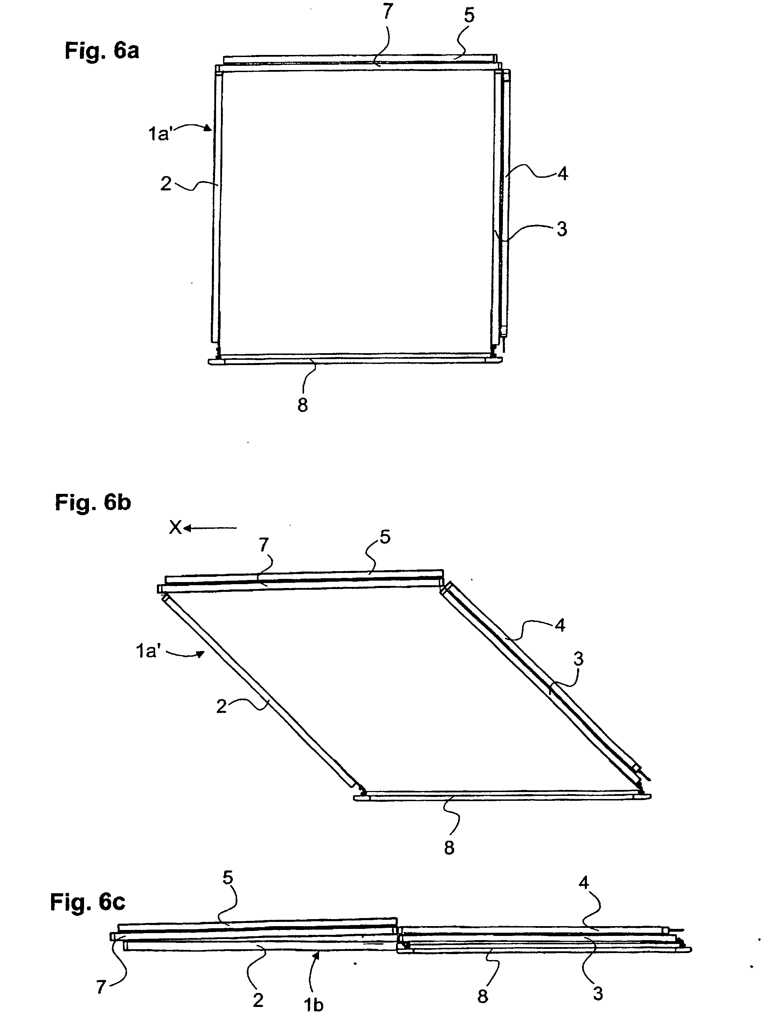

Die beschriebenen Scharniere 11, 12 sind gemäss Fig. 3a-c derart angebracht, dass der Frachtcontainer 1a' (siehe Fig. 6a) in Richtung X parallelogrammartig zusammengelegt werden kann.

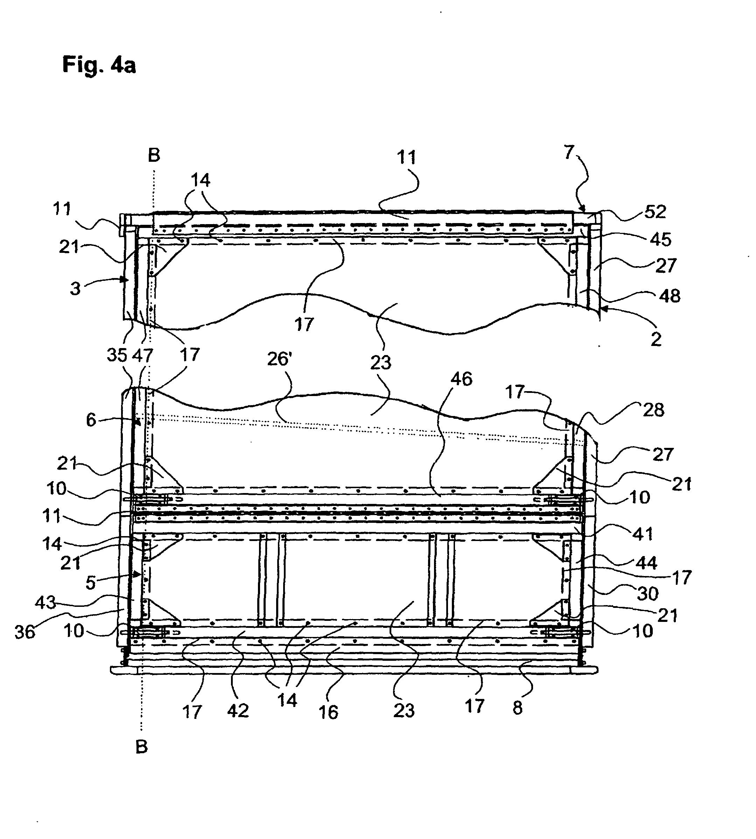

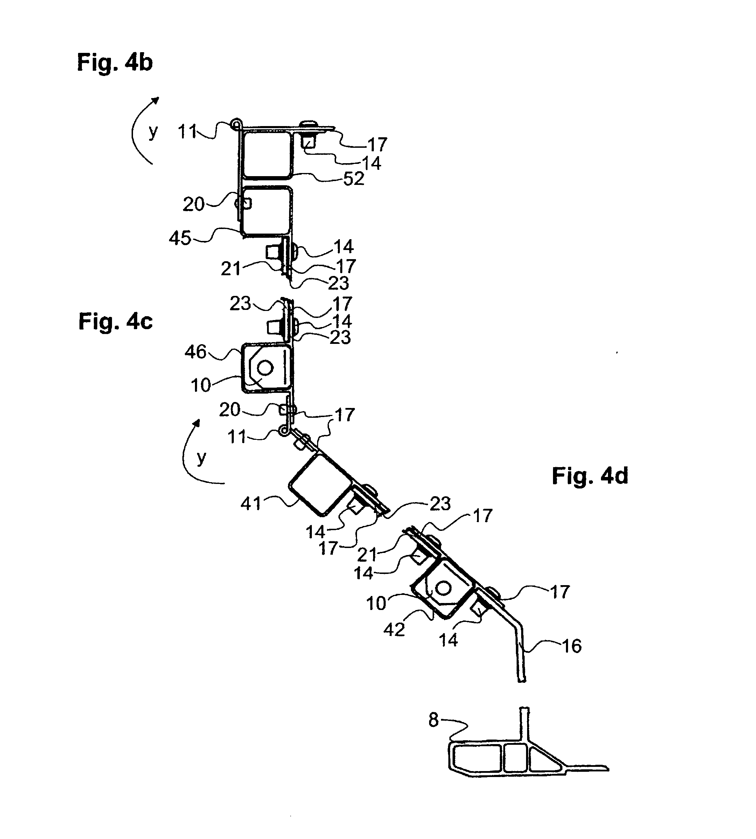

Die Rahmenprofile oben, unten, rückseitig, vorne 41, 42, 43, 44 des äusseren unteren Seitenrahmens 5 sind mittels an die inneren Profilstege 17 angenieteten Verbindungsbleche 21 gegenseitig verbunden (siehe Fig. 4a). Der äussere untere Seitenrahmen 5 ist mit einer Wandverkleidung 23 aus Aluminiumblech, welche mittels Scherzugnieten 14 an den innen liegenden Profilstegen 17 angebracht ist, ausgefacht (siehe auch Fig. 4c-d). Am Rahmenprofil unten 42 sind randseitig Schnappverschlüsse 10 im Profilhohlraum eingelassen. Diese sind der Übersicht wegen in Fig. 4a sichtbar gemacht. Die Verschluss-Bolzen der Schnappverschlüsse 10 greifen im geschlossenen Zustand in Rastöffnungen der anstossenden seitlichen Rahmenprofilen schräg 36, 30 des rückseitigen bzw. vorderen Rahmens 3, 2 ein. Die nach aussen weisenden, frontseitigen Rahmenprofilflächen der Rahmenprofile 41, 42, 43, 44 liegen mit den frontseitigen Rahmenprofilflächen der Rahmenprofile schräg 30, 36 des vorderen Rahmens 2 und des rückseitigen Rahmens 3 in einer gemeinsamen Ebene.

Ein am aussen liegenden Steg 17 des unteren Rahmenprofils 42 befestigtes abgewinkeltes Längsblech 16 weist mit seinem unteren Ende zum Bodenelement 8 (siehe auch Fig. 4d).

Die Rahmenprofile oben, unten, rückseitig, vorne 45, 46, 47, 48 bilden den äusseren oberen Seitenrahmen 6, welcher analog zum äusseren unteren Seitenrahmen 5 über Verbindungs-bleche 21 gefügt und mit einer Wandverkleidung 23 aus Aluminiumblech ausgefacht ist (siehe auch Fig. 4b-c).

Die beiden gegeneinander anstossenden Rahmenprofile 41, 46 der äusseren Seitenrahmen 5, 6 sind an ihren gegenüberliegenden Profilstegen 17 frontseitig über ein mit Nieten 20 befestigtes Bandscharnier 11 miteinander drehbeweglich verbunden (siehe auch Fig. 4c).

Am unteren horizontalen Rahmenprofil 46 des äusseren oberen Seitenrahmens 6 sind randseitig Schnappverschlüsse 10 im Profilhohlraum eingelassen. Sie sind der Übersicht wegen in Fig. 4a sichtbar gemacht. Die Verschluss-Bolzen der Schnappverschlüsse 10 greifen im geschlossenen Zustand in Rastöffnungen in den anstossenden seitlichen Rahmenprofilen 35, 27 des rückseitigen bzw. vorderen Rahmens 3, 2 ein.

Die den Rastöffnungen der äusseren Containerseite anliegenden Verbindungsbleche 21', 55' reichen über die Profilstege 17 hinaus und überdecken die anschliessende Rahmenprofilflächen, so dass die Rastöffnung durch die Rahmenprofilwand und das Verbindungsblech 21' bzw. 55' führt. Dies bezweckt eine Verstärkung im Bereich der Rastöffnung (siehe Fig. 3a, 5a).

Die nach aussen weisenden, frontseitigen Rahmenprofilflächen der Rahmenprofile 45, 46, 47, 48 des äusseren oberen Seitenrahmens 6 liegen mit den frontseitigen Rahmenprofilflächen der Rahmenprofile aussen 27, 35, 52 des vorderen Rahmens 2, des rückseitigen Rahmens 3 und des Dachrahmens 7 in einer gemeinsamen Ebene.

Der Frachtcontainer ist an seiner äusseren Seite zwischen dem rückseitigen Rahmen 3 und dem vorderen Rahmen 2 über eine an den Rahmenprofilen aussen 35, 27 angebrachte Verstrebung in der Ausführung eines Drahtseiles 26' (in Fig. 4a schematisch dargestellt) zusätzlich stabilisiert. Das Drahtseil 26' weist eine Dicke von ca. 5 mm auf und ist vorzugsweise an den Profilstegen 17 der genannten Profile angebracht. Im vollkommen aufgeklappten Zustand des Frachtcontainers ist das Drahtseil 26' gespannt.

Das Drahtseil 26' ist an den Rahmenprofilen in leicht schräger, in Richtung vorderen Rahmen 2 abfallender Lage befestigt. Zur Befestigung sind Nieten, insbesondere Scherzugnieten oder Schrauben, vorgesehen.

Fig. 4b zeigt unter anderem auch die Befestigung des Bandscharniers 11 am oberen horizontalen Rahmenprofil 45 des äusseren Seitenrahmens 6 mittels Nieten 20, wobei das Bandscharnier 11 mit seinem anderen Scharnierflügel auf dem anstossenden Rahmenprofil 52 des Dachrahmens 7 aufliegt und an dessen Profilsteg 17 mittels Scherzugnieten 14 befestigt ist.

Fig. 4d zeigt unter anderem auch die Befestigung des abgewinkelten Längsbleches 16 an den Profilsteg 17 des Rahmenprofil 42 mittels Scherzugnieten 14. In Fig. 4c und 4d sind ebenfalls die in den Rahmenprofilen 42 und 46 eingelassenen Riegelvorrichtungen 10 zu sehen.

Vor dem Zusammenklappen des Frachtcontainers 1a wird der äussere untere Rahmen 5 nach dem Lösen der bodenwärtigen Schnappverschlüsse 10 über das mittlere Bandscharnier 11 in Drehrichtung Y von seiner Schrägposition in eine frei pendelnde Lage gebracht. Anschliessend werden die beiden äusseren Seitenrahmen 5, 6 nach Lösen der mittleren Schnappverschlüsse 10 gemeinsam über das dachwärtige Bandscharnier 11 in Drehrichtung Y umgeklappt und auf den Dachrahmen 7 gelegt. Die Scharniere 11 sind derart montiert, dass die vorgenannten Drehbewegungen einwandfrei ausgeführt werden können.

Der vordere Rahmen 2 (Fig. 5a) enthält Rahmenprofile oben, aussen, mittig, innen, schräg 25, 27, 28, 29, 30, welche über Verbindungsbleche 21, 21', 55, 55' miteinander verbunden sind. Im vorliegenden Ausführungsbeispiel weist der vordere Rahmen 2 kein bodenwärtiges horizontales Rahmenprofil auf. Die Verbindungsbleche 21, 21', 55, 55' sind mittels Scherzugnieten 14 an den inneren Profilstegen 17 der zu verbindenden Rahmenprofile befestigt. Der vordere Rahmen 2 ist mit dem Bodenelement 8 über Scharniere 12 drehbeweglich verbunden. Da der vordere Rahmen 2 kein an das Bodenelement 8 anstossendes Rahmenprofil aufweist, sind die Scharniere 12 mittels Scherzugnieten 14 an den Verbindungsblechen 55, 55' befestigt (siehe auch Fig. 5c). Im dachwärtigen Bereich stösst das horizontale Rahmenprofil oben 25 an das Rahmenprofil vorne 50 des Dachrahmens 7 an (siehe auch Fig. 5b). Die beiden Profile sind an den von der Frontansicht wegweisenden vertikalen Profilflächen über ein angenietetes Bandscharnier 11 miteinander verbunden. Die Scharniere 11, 12 sind so angebracht, dass der Frachtcontainer 1a' (siehe auch Fig. 6a) in Richtung X parallelogrammartig zusammengelegt werden kann (Fig. 5b,c).

Die nach aussen weisenden, frontseitigen Rahmenprofilflächen der Rahmenprofile 25, 27, 28, 29, 30 des vorderen Seitenrahmens 2 liegen mit der frontseitigen Rahmenprofilfläche des Rahmenprofils vorne 50 des Dachrahmens 7 in einer gemeinsamen Ebene.

Die Verladeöffnung ist mit einer flexiblen Türe bzw Türplane 9 mit sogenanntem Barless-Verschluss ausgerüstet (Fig. 5a). An die Türplane 9 sind horizontal verlaufende Verschlussgurten 15 angebracht, beispielsweise durch annähen. Die Verschlussgurten 15 werden mit ihren verlängerten Enden durch Schlaufen 64 an den seitlichen Rahmenprofilen mittig und innen 28, 29 des vorderen Rahmens 2 gezogen. Durch Straffziehen der Gurten wird die Türplane gespannt, wobei die durch die Schlaufen 64 geführten Gurtabschnitte der verlängerten Gurtenden zurückgelegt und mittels Klett- bzw. Velcro®-Verschluss am darunterliegenden Gurtabschnitt auf der Türplane 9 fixiert werden. Am bodenwärtigen Ende der Türplane ist ein weiterer Verschlussgurt 15' angebracht, welcher mit seinen verlängerten Enden seitlich ebenfalls durch Schlaufen 64 an den seitlichen Rahmenprofilen 28, 29 geführt wird. Der Verschlussgurt 15' wird mittels Gurtspanner 65 straff gezogen, wodurch die Plane gespannt wird.

Die Schlaufen 64 können beispielsweise an den Rahmenprofile durch Nieten, Schrauben oder Kleben befestigte U-förmige Elemente mit seitlichen Verbindungsflächen oder -stegen aus Metall oder Kunststoff sein. Die Türplane ist an ihrem dachwärtigen Abschluss in eine Kedemut eines durch Nietverbindung an den Profilsteg 17 des Rahmenprofils oben 25 des vorderen Rahmens 2 angebrachten Scharnierprofils 62 eingelassen (Fig. 5b).

Der Dachrahmen 7 (nicht gezeigt in den Zeichnungen) besteht im wesentlichen aus den Rahmenprofilen rückseitig, vorne, innen, aussen 49, 50, 51, 52 (siehe Fig. 2 bis 5), welche analog zu den restlichen vorgenannten Rahmen mittels Verbindungsblechen 21 gegenseitig verbunden sind. Die Profilstege 17 der Rahmenprofile 49, 50, 51, 52 liegen im Unterschied zu den anderen Rahmenstrukturen nicht innenseitig sondern aussenseitig (siehe Fig. 5b) und die Wandverkleidung 23 ist auf der aussen liegenden Fläche am Profilsteg 17 befestigt. Diese abweichende Anordnung der Profilstege 17 am Dachrahmen 2 ergibt sich aus der Positionierung des Scharniers 11 wie in Fig. 5b gezeigt.

Fig. 6a-c zeigt den letzten Schritt des Zusammenklappens des Frachtcontainer aus einer Seiten- bzw. aus der Frontansicht analog zu Fig. 2. Der äussere obere Seitenrahmen 6 und der äussere untere Seitenrahmen 5 (aus dieser Seitenansicht nicht ersichtlich) wurden bereits in einem der ersten Schritte auf den Dachrahmen 7 umgeklappt und der innere Seitenrahmen 4 wurde ebenfalls in einem vorgängigen Schritt auf den rückseitigen Rahmen 3 umgeklappt.

Durch nachfolgendes parallelogrammartiges Zusammenklappen des Frachtcontainers 1a' bzw. seiner Rahmenkonstruktion in Richtung X erhält man einen zusammengeklappten Frachtcontainer 1b. Beim Zusammenklappen kommt der vordere Rahmen 2 neben dem Bodenelement 8 zu liegen. Darüber legen sich, ebenfalls nebeneinander und in der Höhe versetzt, der Dachrahmen 7 mit den auf diesen umgeschwenkten Seitenrahmen 5, 6 und der rückseitige Rahmen 3 mit dem auf diesen umgeschwenkten inneren Seitenrahmen 4.

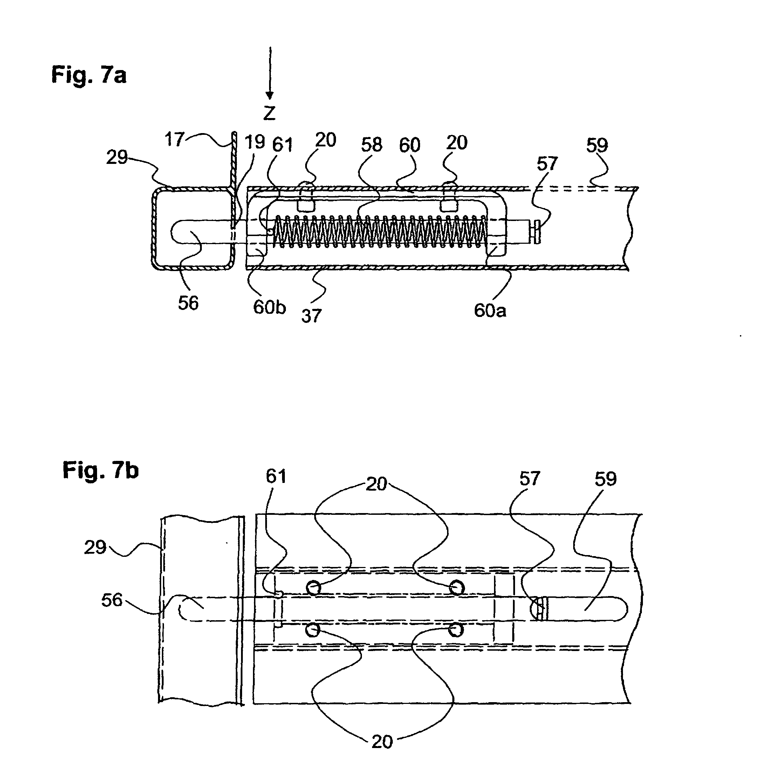

Fig. 7a zeigt den Schnappverschluss oder Riegelverschluss 10, welcher den inneren Seitenrahmen in seinem dachwärtigen Bereich an den vorderen Rahmen 2 arretiert, in einer Querschnittsansicht entlang E - E gemäss Fig. 2a. Ein C-förmiger Lagerbock 60 ist randseitig in das horizontale Rahmenhohlprofil oben 37 des inneren Seitenrahmens 4 eingelassen und mittels Nieten 20 an der Profilwand befestigt. Die beiden kurzen Schenkel 60a, b des Lagerbocks 60 sind von einem Verschluss-Bolzen 56 durchsetzt, welcher axial von einer Wendelfeder 58 umfasst ist, die einerseits dem kurzen Schenkel 60a innenseitig aufliegt und andererseits von einem den Verschluss-Bolzen 56 durchdringenden Arretierstift 61 gehalten ist. Der Arretierstift 61 liegt bei fehlender äusserer Krafteinwirkung dem unteren kurzen Schen-5 kel 60b auf und das Ende des Verschluss-Bolzens 56 greift durch eine Rastöffnung 19 in das vertikale Rahmenprofil innen 29 des vorderen Rahmens 2.

Durch das Zurückziehen des Betätigungselement 57, welcher Containerinnenseitig durch das Langloch 59 bedient wird, wird der Verschluss-Bolzen 56 aus der Rastöffnung 19 zurückgezogen und gleichzeitig durch das Zurückgleiten des Arretierstiftes 61 wird die Wendelfeder 58 gespannt. Der Riegelverschluss ist geöffnet. Zum Arretieren wird das Betätigungselement 57 losgelassen, wodurch der Verschluss-Bolzen 56 unter Entspannung der Wendelfeder 58 in die Rastöffnung 19 einschnappt.

Der Frachtcontainer des gezeigten Ausführungsbeispieles weist eine Gesamthöhe h von 150 cm bis 160 cm, vorzugsweise von 158 cm, eine Gesamtlänge b von 190 cm bis 200 cm, vorzugsweise von 198 cm, eine Bodenlänge a von 150 cm bis 160 cm, vorzugsweise von 156 cm (Fig. 5a), eine Bodenbreite c von 150 cm bis 160 cm, vorzugsweise von 153 cm und eine

Breite d von 145 cm bis 155 cm, vorzugsweise von 150 cm auf (Fig. 2a).

## Patentansprüche

1. Zusammenklappbarer Frachtcontainer für Lufttransporte, mit einer auf einem Bodenelement (8) angeordneten Rahmenstruktur, enthaltend
a) einen dem Bodenelement (8) parallel gegenüberliegenden Dachrahmen (7),
b) einen vorderen Rahmen (2),
c) einen dem vorderen Rahmen (2) parallel gegenüberliegenden rückseitigen Rahmen (3),
d) einen inneren Seitenrahmen (4), welcher an einer seiner Längsseite über eine Drehgelenkverbindung (11) drehbeweglich mit der Längsseite eines angrenzenden Rahmens oder des Bodenelementes (8) verbunden ist, und gegenüber diesem angeordnet
e) einen zusammen mit dem vorderen und rückseitigen Rahmen (2, 3) einen Containerbalkon ausbildenden äusseren oberen und einen mit seiner bodenwärtigen Längsseite zum Containerinnenraum geneigten, äusseren unteren Seitenrahmen (5, 6), wobei der äussere untere Seitenrahmen (5) an seiner oberen Längsseite über eine Drehgelenkverbindung mit horizontal ausgerichteten Drehachsen drehbeweglich mit der Längsseite des angrenzenden äusseren oberen Seitenrahmens (6) und der äussere obere Seitenrahmen (6) an seiner oberen Längsseite über eine Drehgelenkverbindung mit horizontal ausgerichteten Drehachsen drehbeweglich mit der Längsseite des angrenzenden Dachrahmens (7) verbunden ist,
wobei der Frachtcontainer (1a) im aufgeklappten und betriebsbereiten Zustand formstabil und selbsttragend ist,
**dadurch gekennzeichnet, dass**
der rückseitige und vordere Rahmen (3, 2) an den unteren Längsseiten über Drehgelenkverbindungen (12) mit horizontal ausgerichteten Drehachsen drehbeweglich mit den anstossenden Längsseiten des Bodenelementes (8) und an den oberen Längsseiten über Drehgelenkverbindungen (11) mit horizontal ausgerichteten Drehachsen drehbeweglich mit den anstossenden Längsseiten des Dachrahmens (7) verbunden sind, und der äussere obere und untere Seitenrahmen (5, 6) auf den Dachrahmen (7) und der innere Seitenrahmen (4) auf den vorderen Rahmen (2), den rückseitigen Rahmen (3), den Dachrahmen (7) oder das Bodenelement (8) umklappbar ist, so dass durch Umklappen der äusseren Seitenrahmen und des inneren Seitenrahmens (4,5,6) der Prachtcontainer (1a,b) parallelogrammartig zusammenklappbar ist.

2. Zusammenklappbarer Frachtcontainer nach Anspruch 1, **dadurch gekennzeichnet, dass** an den Seitenrahmen (4, 5, 6) und/oder an Längsseiten der an die Seitenrahmen (4, 5, 6) anstossenden Rahmen (2, 3, 7) oder Bodenelement (8) Mittel (10), vorzugsweise Verriegelungsvorrichtungen, zur starren, lösbaren Verbindung der Seitenrahmen (4, 5, 6) mit wenigstens einem der angrenzenden Rahmen (2, 3, 7) oder Bodenelement (8) angeordnet sind.

3. Zusammenklappbarer Frachtcontainer nach Anspruch 1, **dadurch gekennzeichnet, dass** die Rahmen (2, 3, 4, 5, 6, 7) Rahmenprofile enthalten und teilweise oder vollständig mit einer Wandverkleidung (23) versehen sind und die Längsseiten der Rahmen (2, 3, 4, 5, 6, 7) teilweise oder vollständig durch Rahmenprofile begrenzt sind.

4. Zusammenklappbarer Frachtcontainer nach Anspruch 1, **dadurch gekennzeichnet, dass** die Rahmen (2,3,4,5,6,7) Rahmenprofile enthalten und der innere Seitenrahmen (4) und der rückseitige Rahmen (3) an ihren anstossenden vertikalen Rahmenprofilen (40, 30) über eine Drehgelenkverbindung (11) mit vertikal ausgerichteter Drehachse drehbeweglich miteinander verbunden sind, und der innere Seitenrahmen (4) und der vordere Rahmen (2) an ihren anstossenden vertikalen Rahmenprofilen (29, 39) über Verriegelungsvorrichtungen miteinander starr verbunden sind, und der äussere untere Seitenrahmen (5), vorzugsweise an seinem unteren Rahmenabschnitt, mit dem Bodenelement (8) und/oder dem seitlich anstossenden rückseitigen (3) und/oder vorderen Rahmen (2) mittels einer Verriegelungsvorrichtung starr verbunden ist, und der äussere untere Seitenrahmen (5) mit einem Rahmenprofil oben (41) über eine Drehgelenkverbindung (11) mit horizontal ausgerichteten Drehachsen mit einem Rahmenprofil unten (46) des äusseren oberen Seitenrahmens (6) drehbeweglich verbunden ist, und der äussere obere Seitenrahmen (6) an seinem unteren Rahmenabschnitt und/oder der äussere untere Seitenrahmen (5) an seinem oberen Rahmenabschnitt mit dem seitlich anstossenden rückseitigen und/oder vorderen Rahmen (3, 2) mittels einer Verriegelungsvorrichtung verbunden ist, und der äussere obere Seitenrahmen (6) an seinem Rahmenprofil oben (45) über eine Drehgelenkverbindung (11) mit horizontal ausgerichteter Drehachse drehbeweglich mit dem Dachrahmen (7) verbunden ist.

5. Zusammenklappbarer Frachtcontainer nach Anspruch 4, **dadurch gekennzeichnet, dass** der innere Seitenrahmen (4) und der vorderen Rahmen (2) über eine oder mehrere randseitig an den oder in den horizontalen Rahmenprofilen oben, unten (37, 38) des inneren Seitenrahmens (4) angebrachten Verriegelungsvorrichtungen (10) miteinander verbunden sind, und der äussere untere Seitenrahmen (5) über eine oder mehrere randseitig am oder im Rahmenprofil unten (42) angebrachten Verriegelungsvorrichtungen (10) am seitlich anstossenden rückseitigen (3) und/oder dem vorderen Rahmen (2) arretiert ist, und der äussere obere Seitenrahmen (6) über eine oder mehrere randseitig am oder im horizontalen Rahmenprofil (46, 41) angebrachten Verriegelungsvorrichtungen (10) seitlich an den anstossenden rückseitigen und/oder vorderen Rahmen (3, 2) arretiert ist.

6. Zusammenklappbarer Frachtcontainer nach Anspruch 1, **dadurch gekennzeichnet, dass** die Rahmen Rahmenprofile enthalten und die die Rahmen (2,3,4,5,6,7) gegenseitig verbindenden Drehgelenkverbindungen sich im wesentlichen über die gesamte Längsseite der Rahmenprofile erstreckende Bandscharniere (11) sind, und die den vorderen oder rückseitigen Rahmen (2, 3) mit dem Bodenelement (8) verbindenden Drehgelenkverbindungen jeweils zwei randseitig und bodenwärtig an den Rahmen (2, 3) angeordnete Scharniere (12) sind.

7. Zusammenklappbarer Frachtcontainer nach Anspruch 2, **dadurch gekennzeichnet, dass** die Rahmen (2,3,4,5,6,7) Rahmenprofile enthalten und die Rahmenprofile Strangpressprofile aus Aluminium oder seinen Legierungen und vorzugsweise Einfachhohlprofile sind und die Verriegelungsvorrichtungen Schnappverschlüsse (10) mit federbelasteten Verschluss-Bolzen (56) sind, und die Schnappverschlüsse (10) in die Hohlkörper der Rahmenprofile eingelassen sind und der Verschluss-Bolzen (56) im eingeschnappten Zustand durch eine Rastöffnung (19) in eine Wand des, vorzugsweise in einem rechten Winkel, anstossenden Rahmenprofils und/oder eines anliegenden Verbindungsblechs 21', 55' greift.

8. Zusammenklappbarer Frachtcontainer nach Anspruch 1, **dadurch gekennzeichnet, dass** in der Rahmenstruktur, vorzugsweise im vorderen Rahmen (2) eine Beladeöffnung angeordnet ist.

9. Zusammenklappbarer Frachtcontainer nach Anspruch 8, **dadurch gekennzeichnet, dass** die Beladeöffnung über eine faltbare oder aufrollbare, flexible Türe (9) mit horizontal verlaufenden Verschlussgurten (15, 15') verfügt, und bei verschlossener Tür (9) verlängerte Enden der Verschlussgurten (15, 15') durch Schlaufen (64) an den seitlichen Rahmenprofilen (28, 29) geführt und zurückgelegt und mittels Klettverschluss oder Gurtspanner an die Tür (9) oder an den darunterliegenden und an der Tür befestigten Gurtabschnitt fixiert sind, wobei die Verschlussgurten (15, 15') straff gezogen sind und die flexible Tür (9) gespannt ist.

10. Zusammenklappbarer Frachtcontainer nach Anspruch 2, **dadurch gekennzeichnet, dass** die Verriegelungsvorrichtungen (10) nur vom Innenraum des Frachtcontainers (1a) aus geöffnet werden können und der Frachtcontainer (1a) bei fehlendem Zugang zum Containerinnenraum nicht zusammengeklappt werden kann.

11. Zusammenklappbarer Frachtcontainer nach Anspruch 1, **dadurch gekennzeichnet, dass** die Rahmen (2,3,4,5,6,7) Rahmenprofile enthalten und an der inneren Seite zwischen dem Dachrahmen (7) und dem vorderen Rahmen (2) eine seilartige Verstrebung (26) vorgesehen ist, wobei das eine Ende der Verstrebung (26) an einem Rahmenprofil innen (51) des Dachrahmens (7) und das andere Ende an einem Rahmenprofil innen (29) des vorderen Rahmens (2) befestigt ist, und dass an der äusseren Seite zwischen dem rückseitigen Rahmen (3) und dem vorderen Rahmen (2) eine seilartige Verstrebung (26') vorgesehen ist, wobei das eine Ende der Verstrebung (26') an einem Rahmenprofil aussen (35) des rückseitigen Rahmens (3) und das andere Ende an einem Rahmenprofil aussen (27) des vorderen Rahmens (2) befestigt ist.

12. Verfahren zum Zusammenlegen eines klappbaren Frachtcontainers nach Anspruch 1, wobei an den Seitenrahmen (4, 5, 6) und/oder an Längsseiten der an die Seitenrahmen (4, 5, 6) anstossenden Rahmen (2, 3, 7) oder Bodenelement (8) Verriegelungsvorrichtungen (10) zur starren, lösbaren Verbindung der Seitenrahmen (4, 5, 6) mit wenigstens einem der angrenzenden Rahmen (2, 3, 7) oder Bodenelement (8) angeordnet sind,
**dadurch gekennzeichnet, dass**
den inneren Seitenrahmen (4) mit dem vorderen Rahmen (2) verbindende Verriegelungsvorrichtungen (10) geöffnet werden und der innere Seitenrahmen (4) um die durch die Drehgelenke (11), welche den inneren Seitenrahmen (4) und den rückseitigen Rahmen (3) miteinander verbinden, gegebene vertikale Drehachse geschwenkt und auf den rückseitigen Rahmen (3) gelegt wird und den äusseren unteren und äusseren oberen Seitenrahmen (5, 6) an die Rahmenprofile aussen des vorderen und/oder rückseitigen Rahmens (2, 3) und/oder an das Bodenelement (8) arretierende Verriegelungsvorrichtungen (10) geöffnet werden und der äussere untere Seitenrahmen (5) um die durch die Drehgelenke (11), welche den äusseren unteren und äusseren oberen Seitenrahmen (5, 6) miteinander verbinden, gegebene horizontale Drehachse in die Ebene des äusseren oberen Seitenrahmen (6) geschwenkt wird, und der äussere untere Seitenrahmen (5) gemeinsam mit dem äusseren oberen Seitenrahmen (6) um die durch die Drehgelenke (11), welche den äusseren oberen Seitenrahmen (6) und den Dachrahmen (7) miteinander verbinden, gegebene horizontale Drehachse geschwenkt und auf die Aussenfläche
des Dachrahmens (7) gelegt werden, und der Frachtcontainer um die durch Drehgelenke (11, 12), welche das Bodenelement (8) einerseits und den Dachrahmen (7) andererseits mit dem vorderen und dem rückseitigen Rahmen (2, 3) verbinden, gegebene horizontale Drehachse parallelogrammartig zusammengeklappt wird.

13. Verfahren zur Herstellung eines Frachtcontainers nach Anspruch 1,
**dadurch gekennzeichnet, dass**
vorfabrizierte und in Mass geschnittene Rahmenprofile, vorzugsweise stranggepresste Einfachhohlprofile aus Aluminium, über Eckverbindungen (21, 21', 55, 55'), vorzugsweise über Verbindungsbleche, zu Rahmen (2, 3, 4, 5, 6, 7) gefügt werden, und an die Rahmen, d.h. an dessen Rahmenprofile, mit Ausnahme des die Türöffnung enthaltenden Rahmens, vorzugsweise an den Stegen (17) der Rahmenprofile, Wandverkleidungen (23), vorzugsweise aus Aluminiumblech, ausfachend befestigt werden, vorzugsweise durch Nieten, insbesondere durch Scherzugnieten (14), und die Rahmen an ihren Rahmenprofilen mittels Drehgelenken (11, 12) und/oder Verriegelungsvorrichtungen (10) zusammen mit dem Bodenelement (8) zu einem formstabilen, selbsttragenden und zusammenklappbaren Frachtcontainer (1a) gefügt werden.

## Claims

1. Collapsible freight container for air transport, with a frame structure arranged on a base element (8), comprising
a) a roof frame (7) situated opposite and parallel to the base element (8),
b) a front frame (2),
c) a rear frame (3) situated opposite and parallel to the front frame (2),
d) an inner side frame (4) rotatably connected at one of its longitudinal sides by means of a swivel joint (11) to the longitudinal side of an adjoining frame or of the base element (8), and arranged opposite it, and
e) an outer upper side frame (5) forming a container balcony together with the front and rear frames (2, 3) and an outer lower side frame (6) with its bottom longitudinal side base inclined towards the interior of the container, the outer lower side frame (5) being rotatably connected at its upper longitudinal side by means of a swivel joint with horizontal axes of rotation to the longitudinal side of the adjoining outer upper side frame (6) and the outer upper side frame (6) being rotatably connected at its upper longitudinal side by means of a swivel joint with horizontal axes of rotation to the longitudinal side of the adjoining roof frame (7),
the freight container (1a) being dimensionally stable and self-supporting in the unfolded state ready for use, **characterised in that** the rear and front frames (3, 2) are rotatably connected at their lower longitudinal sides by means of swivel joints (12) with horizontal axes of rotation to the adjoining longitudinal sides of the base element (8) and at their upper longitudinal sides by means of swivel joints (11) with horizontal axes of rotation to the adjoining longitudinal sides of the roof frame (7), and the outer upper and lower side frames (5,6) can be folded down on to the roof frame (7) and the inner side frame (4) can be folded down on to the front frame (2), the rear frame (3), the roof frame (7) or the base element (8) in such a manner that the freight container (1a, b) can be collapsed in a parallelogram-like manner by folding down the outer side frames and the inner side frame (4, 5, 6).

2. Collapsible freight container according to claim 1, **characterised in that** means (10), preferably locking devices, for the rigid, releasable connection of the side frames (4, 5, 6) to at least one of the adjoining frames (2, 3, 7) or base element (8) are arranged on the side frames (4, 5, 6) and/or on the longitudinal sides of the frames (2, 3, 7) or base element (8) adjoining the side frames (4, 5, 6).

3. Collapsible freight container according to claim 1, **characterised in that** the frames (2, 3, 4, 5, 6, 7) comprise frame sections and are provided partially or completely with panelling (23) and the longitudinal sides of the frames (2, 3, 4, 5, 6, 7) are delimited partially or completely by frame sections.

4. Collapsible freight container according to claim 1, **characterised in that** the frames (2, 3, 4, 5, 6, 7) comprise frame sections and the inner side frame (4) and the rear frame (3) are rotatably connected together at their adjoining vertical frame sections (40, 30) by means of a swivel joint (11) with a vertical axis of rotation and the inner side frame (4) and the front frame (2) are rigidly connected together at their adjoining vertical frame sections (29, 39) by means of locking devices and the outer lower side frame (5) is rigidly connected, preferably at its lower frame portion, to the base element (8) and/or to the laterally adjoining rear (3) and/or front frame (2) by means of a locking device and the outer lower side frame (5) is rotatably connected at an upper frame section (41) by means of a swivel joint (11) with horizontal axes of rotation to a lower frame section (46) of the outer upper side frame (6) and the outer upper side frame (6) is connected at its lower frame portion and/or the outer lower side frame (5) is connected at its upper frame portion to the laterally adjoining rear and/or front frames (3, 2) by means of a locking device and the outer upper side frame (6) is rotatably connected at its upper frame section (45) by means of a swivel joint (11) with a horizontal axis of rotation to the roof frame (7).

5. Collapsible freight container according to claim 4, **characterised in that** the inner side frame (4) and the front frame (2) are connected together by means of one or more locking devices (10) mounted at or in the edges of the upper and lower horizontal frame sections (37, 38) of the inner side frame (4) and the outer lower side frame (5) is locked to the laterally adjoining rear (3) and/or front frame (2) by means of one or more locking devices (10) mounted at or in the edge of the lower frame section (42) and the outer upper side frame (6) is locked laterally to the adjoining rear and/or front frame (3, 2) by means of one or more locking devices (10) mounted on or in the edge of the horizontal frame section (46, 41).

6. Collapsible freight container according to claim 1, **characterised in that** the frames comprise frame sections and the swivel joint connecting the frames (2, 3, 4, 5, 6, 7) together are strap hinges (11) extending substantially over the entire longitudinal sides of the frame sections and the swivel joints connecting the front or rear frames (2, 3) to the base element (8) are two respective hinges (12) arranged at the edge and the bottom of the frames (2, 3).

7. Collapsible freight container according to claim 2, **characterised in that** the frames (2, 3, 4, 5, 6, 7) comprise frame sections and the frame sections are extruded sections of aluminium or alloys thereof and preferably single hollow sections and the locking devices are snap locks (10) with spring-loaded locking bolts (56) and the snap locks (10) are countersunk into the hollow bodies of the frame sections and the locking bolt (56) passes in the snapped-in state through a snap-in opening (19) in one wall of the adjoining frame section, preferably at a right angle thereto, and/or an adjacent connecting plate 21', 55'.

8. Collapsible freight container according to claim 1, **characterised in that** a loading opening is arranged in the frame structure, preferably in the front frame (2).

9. Collapsible freight container according to claim 8, **characterised in that** the loading opening has a foldable or roll-up flexible door (9) with horizontal closure belts (15, 15') and, when the door (9) is closed, extended ends of the closure belts (15, 15') are guided through loops (64) on the lateral frame sections (28, 29) and back and are fixed by means of a Velcro strip fastener or belt tighteners to the door (9) or to the portion of the belt situated therebelow and fixed to the door, the closure belts (15, 15') being pulled taut and the flexible door (9) tensioned.

10. Collapsible freight container according to claim 2, **characterised in that** the locking devices (10) can only be opened from the interior of the freight container (1a) and the freight container (1a) cannot be collapsed if there is no access to the interior of the container.

11. Collapsible freight container according to claim 1, **characterised in that** the frames (2, 3, 4, 5 ,6, 7) comprise frame sections and a cable-type strut (26) is provided on their inner faces between the roof frame (7) and the front frame (2), one end of the strut (26) being fixed to an inner frame section (51) of the roof frame (7) and the other end being fixed to an inner frame section (29) of the front frame (2), and that a cable-type strut (26') is provided on their outer faces between the rear frame (3) and the front frame (2), one end of the strut (26') being fixed to an outer frame section (35) of the rear frame (3) and the other end being fixed to an outer frame section (27) of the front frame (2).

12. Method of collapsing a collapsible freight container according to claim, 1, in which locking devices (10) for the rigid, releasable connection of the side frames (4, 5, 6) to at least one of the adjoining frames (2, 3, 7) or base element (8) are arranged on the side frames (4, 5, 6) and/or on longitudinal sides of the frames (2, 3, 7) or base element (8) adjoining the side frames (4, 5, 6), **characterised in that** locking devices (10) connecting the inner side frame (4) to the front frame (2) are opened and the inner side frame (4) is swivelled about the vertical axis of rotation provided by the swivel joint (11) connecting the inner side frame (4) and the rear frame (3) together and is placed on the rear frame (3) and locking devices (10) locking the outer lower and outer upper side frames (5, 6) to the outer frame sections of the front and/or rear frames (2, 3) and/or to the base element (8) are opened and the outer lower side frame (5) is swivelled about the horizontal axis of rotation provided by the swivel joint (11) connecting the outer lower and outer upper side frames (5, 6) together into the plane of the outer upper side frame (6) and the outer lower side frame (5) is swivelled together with the outer upper side frame (6) about the horizontal axis of rotation provided by the swivel joint (11) connecting the outer upper side frame (6) and the roof frame (7) together and is placed on the outer surface of the roof frame (7) and the freight container is collapsed in a parallelogram-like manner about the horizontal axis of rotation provided by swivel joints (11, 12) connecting, on the one hand, the base element (8) and, on the other hand, the roof frame (7) to the front and rear frames (2, 3).

13. Method of producing a freight container according to claim 1, **characterised in that** prefabricated frame sections cut to size, preferably extruded single hollow sections of aluminium, are assembled together to form frames (2, 3, 4, 5, 6, 7) by means of corner joints (21, 21', 55, 55'), preferably by means of connecting plates, and panelling (23), preferably made of aluminium sheet, is fixed to the frames, i.e. to the frame sections thereof, with the exception of the frame containing the door opening, preferably to the webs (17) of the frame sections, preferably by means of rivets, in particular by means of tensile-shear rivets (14), and the frames are assembled at their frame sections by means of swivel joints (11, 12) and/or locking devices (10) together with the base element (8) to form a dimensionally stable, self-supporting, collapsible freight container (1a).

## Revendications

1. Conteneur à fret pliant pour transports aériens, avec une structure à cadre disposée sur un élément plancher (8), comprenant
a) un cadre de toit (7) disposé parallèlement en face de l'élément plancher (8),
b) un cadre avant (2),
c) un cadre arrière (3) disposé parallèlement en face du cadre avant (2),
d) un cadre latéral intérieur (4), qui est relié par un de ses côtés longitudinaux de manière permettant la rotation via une articulation tournante (11) au côté longitudinal d'un cadre adjacent ou de l'élément plancher (8) et est disposé en face de celui-ci
e) un cadre latéral extérieur supérieur (6) formant avec les cadres avant et arrière (2, 3) un balcon de conteneur et un cadre latéral extérieur inférieur (5) dont le côté longitudinal côté plancher est incliné vers l'intérieur du conteneur, le cadre latéral extérieur inférieur (5) étant relié de manière permettant la rotation par son côté longitudinal supérieur via une articulation tournante orientée horizontalement au côté longitudinal du cadre latéral extérieur supérieur adjacent (6) et le cadre latéral extérieur supérieur (6) étant relié de manière permettant la rotation par son côté longitudinal supérieur via une articulation tournante orientée horizontalement au côté longitudinal du cadre de toit adjacent (7),
le conteneur à fret (la) étant indéformable et autoportant à l'état déployé et à l'état prêt à l'emploi,
**caractérisé en ce que**
les cadres arrière et avant (3, 2) sont reliés de manière permettant la rotation par les côtés longitudinaux inférieurs via des articulations tournantes (12) avec des axes de rotation orientés horizontalement aux côtés longitudinaux adjacents de l'élément plancher (8) et sont reliés de manière permettant la rotation par les côtés longitudinaux supérieurs via des articulations tournantes (11) avec des axes de rotation orientés horizontalement aux côtés longitudinaux adjacents du cadre de toit (7), et **en ce que** le cadre latéral extérieur supérieur et le cadre latéral extérieur inférieur (5, 6) peuvent être rabattus sur le cadre de toit (7) et le cadre latéral intérieur (4) sur le cadre avant (2), le cadre arrière (3), le cadre de toit (7) ou l'élément plancher (8), de sorte que le conteneur à fret (1a,b) peut être replié en forme de parallélogramme par rabattement des cadres latéraux extérieurs et du cadre latéral intérieur (4, 5, 6).

2. Conteneur à fret pliant suivant la revendication 1, **caractérisé en ce que** des moyens (10), de préférence des dispositifs de verrouillage, sont disposés aux cadres latéraux (4, 5, 6) et/ou aux côtés longitudinaux des cadres (2, 3, 7) adjacents aux cadres latéraux (4, 5, 6) ou de l'élément plancher (8) pour relier de manière rigide, amovible, les cadres latéraux (4, 5, 6) avec au moins un des cadres adjacents (2, 3, 7) ou l'élément plancher (8).

3. Conteneur à fret pliant suivant la revendication 1, **caractérisé en ce que** les cadres (2, 3, 4, 5, 6, 7) contiennent des profilés de cadre et sont pourvus partiellement ou entièrement d'un revêtement (23) et les côtés longitudinaux des cadres (2, 3, 4, 5, 6, 7) sont limités partiellement ou entièrement par des profilés de cadre.

4. Conteneur à fret pliant suivant la revendication 1, **caractérisé en ce que** les cadres (2,3,4,5,6,7) contiennent des profilés de cadre et le cadre latéral intérieur (4) et cadre arrière (3) sont reliés entre eux de manière permettant la rotation par leurs profilés de cadre verticaux adjacents (40, 30) via une articulation tournante (11) avec un axe de rotation orienté verticalement et le cadre latéral intérieur (4) et le cadre avant (2) sont reliés rigidement entre eux par leurs profilés de cadre verticaux adjacents (29, 39) via des dispositifs de verrouillage, et le cadre latéral extérieur inférieur (5) est relié rigidement à l'aide d'un dispositif de verrouillage, de préférence par sa partie de cadre inférieure, à l'élément plancher (8) et/ou au cadre arrière latéralement adjacent (3) et/ou au cadre avant (2), et le cadre latéral extérieur inférieur (5) est relié de manière permettant la rotation dans le haut (41) par un profilé de cadre via une articulation tournante (11) avec des axes de rotation orientés horizontalement à un profilé de cadre inférieur (46) du cadre latéral extérieur supérieur (6), et le cadre latéral extérieur supérieur (6) à sa partie de cadre inférieure et/ou le cadre latéral extérieur inférieur (5) à sa partie de cadre supérieure est relié au cadre latéralement adjacent arrière et/ou au cadre avant (3, 2) à l'aide d'un dispositif de verrouillage, et le cadre latéral extérieur supérieur (6) est relié de manière permettant la rotation au cadre de toit (7) par son profil de cadre en haut (45) via une articulation tournante (11) avec un axe de rotation orienté horizontalement.

5. Conteneur à fret pliant suivant la revendication 4, **caractérisé en ce que** le cadre latéral intérieur (4) et le cadre avant (2) sont reliés entre eux via un ou plusieurs dispositifs de verrouillage (10) disposés en bordure aux profilés de cadre horizontaux en haut, en bas (37, 38) ou dans ceux-ci du cadre latéral intérieur (4), et le cadre latéral extérieur inférieur (5) est bloqué sur le cadre arrière latéralement adjacent (3) et/ou le cadre avant (2) via un ou plusieurs dispositifs de verrouillage (10) montés en bas en bordure sur ou dans le profilé de cadre (42), et le cadre latéral extérieur supérieur (6) est bloqué latéralement sur le cadre arrière adjacent et/ou le cadre avant (3, 2) via un ou plusieurs dispositifs de verrouillage (10) montés en bas en bordure sur ou dans le profilé de cadre horizontal (46, 41).

6. Conteneur à fret pliant suivant la revendication 1, **caractérisé en ce que** les cadres contiennent des profilés de cadre et les articulations tournantes reliant mutuellement les cadres (2,3,4,5,6,7) sont des pentures (11) s'étendant essentiellement sur l'ensemble du côté longitudinal des profilés de cadre et les articulations tournantes reliant le cadre avant ou arrière (2, 3) avec l'élément plancher (8) sont respectivement deux charnières (12) disposées au bord et du côté plancher sur le cadre (2, 3).

7. Conteneur à fret pliant suivant la revendication 2, **caractérisé en ce que** les cadres (2,3,4,5,6,7) contiennent des profilés de cadre et les profilés de cadre sont des profilés extrudés en aluminium ou des alliages de celui-ci et de préférence des profilés creux simples et les dispositifs de verrouillage sont des fermetures à ressort (10) avec boulons de fermeture à ressort (56), et les fermetures à ressort (10) sont noyées dans les corps creux des profilés de cadre et le boulon de fermeture (56) fait prise en position de verrouillage à travers une ouverture de verrouillage (19) dans une paroi du profilé de cadre et/ou d'une tôle de liaison 21', 55' s'y raccordant, de préférence à angle droit.

8. Conteneur à fret pliant suivant la revendication 1, **caractérisé en ce qu'**une ouverture de chargement est disposée dans la structure à cadre, de préférence dans le cadre avant (2).

9. Conteneur à fret pliant suivant la revendication 8, **caractérisé en ce que** l'ouverture de chargement dispose d'une porte flexible, pliable ou enroulable (9) avec des sangles de fermeture (15, 15') s'étendant horizontalement et **en ce que**, lorsque la porte (9) est fermée, des extrémités prolongées des sangles de fermeture (15, 15') sont guidées à travers des boucles (64) aux profilés de cadre latéraux (28, 29) et repliées et fixées à l'aide d'une bande Velcro ou de tendeurs de sangles à la porte (9) ou à la partie de sangle située en dessous et fixée à la porte, les sangles de fermeture (15, 15') étant tendues et la porte flexible (9) étant tendue.

10. Conteneur à fret pliant suivant la revendication 2, **caractérisé en ce que** les dispositifs de verrouillage (10) peuvent uniquement être ouverts de l'intérieur du conteneur à fret (1a) et le conteneur à fret (1a) ne peut pas être replié sans avoir accès à l'intérieur du conteneur.

11. Conteneur à fret pliant suivant la revendication 1, **caractérisé en ce que** les cadres (2,3,4,5,6,7) contiennent des profilés de cadre et une entretoise en forme de câble (26) est prévue du côté intérieur entre le cadre de toit (7) et le cadre avant (2), une extrémité de l'entretoise (26) étant fixée à un profilé de cadre à l'intérieur (51) du cadre de toit (7) et l'autre extrémité à un profilé de cadre à l'intérieur (29) du cadre avant (2),et **en ce qu'**une entretoise en forme de câble (26') est prévue du côté extérieur entre le cadre arrière (3) et le cadre avant (2), une extrémité de l'entretoise (26') étant fixée à un profilé de cadre à l'extérieur (35) du cadre arrière (3) et l'autre extrémité à un profilé de cadre à l'extérieur (27) du cadre avant (2).

12. Procédé de pliage d'un conteneur à fret pliant suivant la revendication 1, des dispositifs de verrouillage (10) étant disposés aux cadres latéraux (4, 5, 6) et/ou aux côtés longitudinaux des cadres (2, 3, 7) adjacents aux cadres latéraux (4, 5, 6) ou de l'élément plancher (8) afin de réaliser une liaison rigide, amovible des cadres latéraux (4, 5, 6) avec au moins un des cadres adjacents (2, 3, 7) ou l'élément plancher (8),
**caractérisé en ce que**
des dispositifs de verrouillage (10) reliant le cadre latéral intérieur (4) au cadre avant (2) sont ouverts et le cadre latéral intérieur (4) pivote autour de l'axe de rotation vertical défini par les articulations tournantes (11) qui relient ensemble le cadre latéral intérieur (4) et le cadre arrière (3) et est posé sur le cadre arrière (3) et des dispositifs de verrouillage (10) bloquant le cadre latéral extérieur inférieur et le cadre latéral extérieur supérieur (5, 6) sur les profilés de cadre à l'extérieur du cadre avant et/ou arrière (2, 3) et/ou sur l'élément plancher (8) sont ouverts et le cadre latéral extérieur inférieur (5) pivote dans le plan du cadre latéral extérieur supérieur (6) autour de l'axe de rotation horizontal défini par les articulations tournantes (11) qui relient ensemble le cadre latéral extérieur inférieur et le cadre latéral extérieur supérieur (5, 6), et le cadre latéral extérieur inférieur (5) et le cadre latéral extérieur supérieur (6) pivotent ensemble autour de l'axe de rotation horizontal défini par les articulations tournantes (11) qui relient ensemble le cadre latéral extérieur supérieur (6) et le cadre de toit (7) et se posent sur la surface extérieure du cadre de toit (7), et le conteneur à fret est replié en forme de parallélogramme autour de l'axe de rotation horizontal défini par les articulations tournantes (11, 12) qui relient l'élément plancher (8) d'une part et le cadre de toit (7) d'autre part avec le cadre avant et le cadre arrière (2, 3).

13. Procédé de fabrication d'un conteneur à fret suivant la revendication 1, **caractérisé en ce que** des profilés de cadre préfabriqués et coupés à longueur, de préférence des profilés creux simples extrudés en aluminium, sont assemblés à l'aide de jonctions d'angle (21, 21', 55, 55'), de préférence via des tôles de liaison, pour former des cadres (2, 3, 4, 5, 6, 7), et des revêtements de parois (23), de préférence en tôle d'aluminium, sont fixés, de préférence à l'aide de rivets, en particulier des rivets (14) résistant au cisaillement en traction, avec déploiement aux cadres, c'est à dire aux profilés de cadres correspondants, à l'exception du cadre contenant l'ouverture de porte, de préférence aux nervures (17) des profilés de cadres, et les cadres sont assemblés par leurs profilés de cadres à l'aide d'articulations tournantes (11, 12) et/ou de dispositifs de verrouillage (10) avec l'élément plancher (8) en un conteneur à fret (1a) indéformable, autoportant et pliant.
